# EUROPÄISCHE PATENTSCHRIFT

(11) **EP 4 238 205 B1**
(45) Veröffentlichungstag und Bekanntmachung des Hinweises auf die Patenterteilung: **02.10.2024**
(21) Anmeldenummer: 21783177.5
(22) Anmeldetag: 22.09.2021
(51) Int. Cl.: H02K 3/28, H02K 3/12

(54) **STATOR FÜR EINE ELEKTRISCHE MASCHINE UND ELEKTRISCHE MASCHINE**
STATOR FOR AN ELECTRIC MACHINE, AND ELECTRIC MACHINE
STATOR POUR UNE MACHINE ÉLECTRIQUE, ET MACHINE ÉLECTRIQUE

(30) Priorität: 29.10.2020 DE 102020213647
(43) Veröffentlichungstag der Anmeldung: 06.09.2023
(73) Patentinhaber: Valeo eAutomotive Germany GmbH, 91056 Erlangen (DE)
(72) Erfinder: DOTZ, Boris, 97616 Bad Neustadt a.d.Saale (DE)
(74) Vertreter: Valeo Powertrain Systems
(86) Internationale Anmeldenummer: PCT/EP2021/076109
(87) Internationale Veröffentlichungsnummer: WO 2022/089848

(56) Entgegenhaltungen:
- WO-A1-2019/228465
- DE-T5- 112017 000 116
- JP-A- 2015 223 076
- US-A1- 2014 042 862
- US-A1- 2014 125 186
- US-A1- 2015 028 713
- US-A1- 2015 028 713
- US-A1- 2018 034 335
- US-A1- 2018 342 918
- US-A1- 2018 358 857

## Beschreibung

Die vorliegende Erfindung betrifft einen Stator für eine elektrische Maschine. Daneben betrifft die Erfindung eine elektrische Maschine zum Antreiben eines Fahrzeugs.

Statoren mit einer aus Formleitern gebildeten Statorwicklung erfreuen sich insbesondere bei automotiven Anwendungen großer Beliebtheit, da sie sich besonders zur automatisierten Fertigung mit einer hohen Prozesszuverlässigkeit eignen und einfache Anschlussmöglichkeiten für die Phasen ermöglichen. Gewünscht wird ein Drehfeld hoher Qualität beim Betrieb der elektrischen Maschine mit geringen Oberwellen und ohmschen Verlusten in der Statorwicklung. Dazu ist es bei einem Stator mit N = 3 Phasen, L = 6 Schichten je Nut und einer Lochzahl q = 3 bekannt, zwei Schichten von Wicklungszonen des Stators um eine Nut in Umfangsrichtung zu versetzen:
So offenbart beispielsweise CN 109 038 878 A einen dreiphasigen Stator für einen Motor, umfassend einen Statorkern und eine Vielzahl von Statornuten im Statorkern, wobei Statorwicklungen in sechs Schichten in der Vielzahl von Statornuten angeordnet sind. Die Anzahl von Statornuten je Pol und Phase beträgt drei. Ein jeweiliger Satz Statorwicklungen belegt ein Paar aneinandergrenzender Lagen der Statornuten, wobei zwei Sätze der Statorwickungen um eine Statornut versetzt sind. Eine jeweilige Phasenwicklungen des Stators ist in zwei Pfade unterteilt, die in Reihe oder parallelgeschaltet sind.

Die Dokumente US 2015/028713, JP 2015 223076 und US 2014/042862 veröffentlichen entsprechende Statoren des Standes der Technik.

Durch einen solchen gesehnten Stator können, insbesondere bei der Verwendung von Rotoren mit axial geraden Polen, Drehmomentrippel effektiv verringert werden, was unter NVH-Gesichtspunkten (NVH: engl. Noise Vibration Harshness) zu einem ruhigeren Betrieb führt.

Der Erfindung liegt die Aufgabe zugrunde, eine verbesserte Möglichkeit zum Betrieb eines gesehnten Stators mit einer aus Formleitern gebildeten Statorwicklung anzugeben.

Diese Aufgabe wird erfindungsgemäß gelöst durch einen Stator für eine elektrische Maschine, wobei der Stator eine Anzahl N Phasen, eine Anzahl P Polpaare und eine Lochzahl q aufweist, wobei N ≥ 3 und P ≥ 2 und q = 3, wobei der Stator einen Statorkern mit einer Vielzahl von Nuten und eine Vielzahl von Formleitern, die in einer ersten bis L-ten Schicht radial geschichtet in den Nuten angeordnet sind, umfasst, wobei L = 6 ist und die Schichten in ihrer Reihenfolge in Radialrichtung benannt sind, wobei die Formleiter je Phase einen ersten Pfad und einen zweiten Pfad, die in Reihe oder parallel miteinander verschaltbar oder verschaltet sind, ausbilden und in P ersten Wicklungszonen und P zweiten Wicklungszonen angeordnet sind, wobei sich die ersten und zweiten Wicklungszonen in Umfangsrichtung abwechseln und sich jede Wicklungszone über die L Schichten erstreckt, wobei eine erste Orientierung und eine der ersten Orientierung entgegengesetzte zweite Orientierung der Umfangsrichtung definiert sind, wobei die Formleiter eines jeweiligen Pfads durch Verbinder, welche Formleiter in benachbarten Wicklungszonen derselben Phase abwechselnd an einer ersten Stirnseite und einer der ersten Stirnseite gegenüberliegenden zweiten Stirnseite des Statorkerns verbinden, zu einer Reihenschaltung mit einem bezüglich der Reihenschaltung ersten äußeren Formleiter und einem bezüglich der Reihenschaltung zweiten äußeren Formleiter verschaltet sind, wobei die erste und zweite Schicht einer jeweiligen Wicklungszone gegenüber der dritten und vierten Schicht der jeweiligen Wicklungszone um eine Nut in Umfangsrichtung versetzt sind, wobei die Pfade jeweils eine kombinierte Schleifen- und Wellenwicklung ausbilden.

Der erfindungsgemäße Stator zeichnet sich dadurch aus, dass er durch den Versatz der Schichten der Wicklungszonen eine Sehnung aufweist, sodass in zumindest einer Nut zwei Phasen mit einem Leiterverhältnis 2/4 zum Liegen kommen. So kann die Effizienz, das Auftreten von Drehmomentrippeln bzw. Drehmomentwelligkeiten und Oberwellen sowie das Auftreten von Geräuschen und Vibrationen im Vergleich zu Statoren mit Wicklungszonen, die sich jeweils über genau q Nuten erstrecken und mithin ungesehnt sind, merklich gesenkt werden. Gleichzeitig kommt es zu keiner signifikanten Erhöhung der Anzahl unterschiedlicher Verbinder-Leiter-Kombinationen, was die Fertigungsfreundlichkeit des erfindungsgemäßen Stators erheblich erhöht.

Die Lochzahl q ist die Anzahl der Nuten je Pol und Phase des Stators. Bei dem erfindungsgemäßen Stator kann N ≤ 12, bevorzugt N ≤ 9, besonders bevorzugt N ≤ 6, sein. Es kann vorgesehen sein, dass P ≤ 20, bevorzugt P ≤ 16, besonders bevorzugt P ≤ 12, ist. Die Anzahl der Nuten ist bevorzugt kleiner als 200, besonders bevorzugt kleiner als 120. Die Anzahl der Nuten kann genau 2 P N q betragen. Es können genau 2·P·N·q·L Formleiter vorgesehen sein. Vorzugsweise realisiert jede Wicklungszone einen Pol des Stators.

Zweckmäßigerweise befindet sich zwischen jedem Paar benachbarter Wicklungszonen einer Phase jeweils genau eine Wicklungszone der übrigen Phasen. Mit anderen Worten ist jedes Paar benachbarter Wicklungszonen einer Phase um q (N-1) Nuten voneinander beabstandet. Vorzugsweise ist der Stator dazu eingerichtet, dass die ersten Wicklungszonen in einer Stromrichtung durchströmt werden, welche der Stromrichtung der zweiten Wicklungszonen entgegengesetzt ist.

In bevorzugter Ausgestaltung ist vorgesehen, dass in jeder Nut genau sechs Formleiter aufgenommen sind und/oder N genau 3 beträgt und/oder P genau 2, 3 oder 4 beträgt. Erfindungsgemäß q=3. Vorzugsweise ist die erste Schicht die radial innerste Schicht und/oder die sechste Schicht die radial äußerste Schicht. Es ist aber auch denkbar, dass die erste Schicht die radial äußerste Schicht und/oder die sechste Schicht die radial innerste Schicht ist.

Die Formleiter können stabförmige Leiter, insbesondere aus Kupfer, sein. Die Formleiter sind typischerweise nicht biegeschlaff. Vorzugsweise nehmen vier Formleiter in den sechs Schichten und/oder in der gesamten Nut wenigstens 60 %, bevorzugt wenigstens 80 %, der Querschnittsfläche einer Nut ein. Bevorzugt weisen die Formleiter einen, gegebenenfalls auch abgerundeten, rechteckigen Querschnitt auf. Jeder Formleiter kann sich vollständig in axialer Richtung durch eine der Nuten erstrecken.

Unter einem "Pfad" ist eine durch die Verbinder realisierte Reihenschaltung von Formleitern zu versehen, die auch als "Strompfad" bezeichnet werden kann. Vorzugsweise umfasst jeder Pfad genau P·q·L Formleiter.

Der Statorkern kann durch eine Vielzahl von geschichtet miteinander fest verbundenen Einzelblechen ausgebildet sein. Insbesondere bildet der Statorkern ein Blechpaket aus. Bevorzugt erstreckt sich jede Nut parallel zu einer Mittelachse, entlang welcher sich ein vom Statorkern umgebener Aufnahmeraum für einen Rotor erstreckt. Die erste Orientierung entspricht vorzugsweise von der ersten Stirnseite aus gesehen dem Uhrzeigersinn.

In bevorzugter Ausgestaltung des erfindungsgemäßen Stators ist vorgesehen, dass der erste äußere Formleiter des ersten Pfads in einer der ersten Wicklungszonen angeordnet ist und der erste äußere Formleiter des zweiten Pfads in einer der ersten Wicklungszonen, angeordnet ist. Besonders bevorzugt ist der erste äu-ßere Formleiter des zweiten Pfads in derselben ersten Wicklungszone, in der der erste äußere Formleiter des ersten Pfads angeordnet ist, angeordnet. So können Verbindungen der beiden Pfade zur Ausgestaltung ihrer Reihen- oder Parallelschaltung besonders raum- und materialsparend ausgebildet werden.

Allgemein kann bei dem erfindungsgemäßen Stator vorgesehen sein, dass jeder Pfad in q in Reihe geschaltete Anordnungen von in Reihe geschalteten Formleitern untergliedert ist. Dabei kann jede Anordnung alle Wicklungszonen der Phase q-mal belegt. Mit anderen Worten erstreckt sich jede Anordnung einmal in Umfangsrichtung um den Statorkern. Somit kann ein jeweiliger Pfad bzw. können die Anordnungen q Umläufe in Umfangsrichtung um den Statorkern ausbilden. Typischerweise umfasst jede Anordnung dieselbe Anzahl von Formleitern.

Bei dem erfindungsgemäßen Stator kann ferner vorgesehen sein, dass jede Wicklungszone in eine erste bis q-te Teilwicklungszone untergliedert ist, sich jede Teilwicklungszone über die L Schichten erstreckt und die Teilwicklungszonen einer jeweiligen Wicklungszone in ihrer Reihenfolge in Umfangsrichtung benannt sind. Dabei kann jede Teilwicklungszone genau L Aufnahmeplätze von insgesamt q L zusammenhängenden Aufnahmeplätzen für jeweils genau einen Formleiter umfassen. Dabei können die erste Teilwicklungszone und die dritte Teilwicklungszone die in Umfangsrichtung äußeren Aufnahmeplätze umfasst und die zweite Teilwicklungszone die in Umfangsrichtung mittleren Aufnahmeplätze umfassen. Bevorzugt liegt die erste Teilwicklungszone zur ersten Orientierung hingewandt und die dritte Teilwicklungszone zur zweiten Orientierung hingewandt.

In vorteilhafter Ausgestaltung ist vorgesehen, dass die Formleiter einer jeweiligen Anordnung in derselben Teilwicklungszone angeordnet sind. Dadurch können während eines Umlaufs die Teilwicklungszonen nacheinander durch eine jeweilige Anordnung besetzt werden.

Bevorzugt ist vorgesehen, dass der erste äußere Formleiter eines jeweiligen Pfads in der ersten Teilwicklungszone angeordnet ist und/oder der zweite äußere Formleiter eines jeweiligen Pfads in der dritten Teilwicklungszone angeordnet ist. Dadurch können die Pfade von Umlauf zu Umlauf entlang einer Orientierung die Teilwicklungszonen besetzen.

Es wird bei dem erfindungsgemäßen Stator besonders bevorzugt, wenn sich der erste Pfad entlang der ersten Orientierung und der zweite Pfad entlang der zweiten Orientierung von ihrem ersten äußeren Formleiter zu ihrem zweiten äußeren Formleiter erstrecken. Mit anderen Worten erstrecken sich der erste Pfad und der zweite Pfad gegensinnig in Umfangsrichtung um den Statorkern.

In bevorzugter Ausgestaltung des erfindungsgemäßen Stators ist vorgesehen, dass die Schleifenwicklungen des ersten Pfads in einem solchen Paar benachbarter Wicklungszonen ausgebildet sind, in denen zwei benachbarte Schleifenwicklungen des zweiten Pfads durch eine Wellenwicklung verbunden sind. Dadurch kann der verfügbare Platz für die Verbinder an den Stirnseiten hochgradig ausgenutzt werden, sodass ein kompakter Wicklungsüberhang realisiert wird.

Vorzugsweise sind beim erfindungsgemäßen Stator die erste und zweite Schicht einer jeweiligen Wicklungszone gegenüber der dritten und vierten Schicht entlang der ersten Orientierung versetzt. Es ist auch denkbar, dass die erste und zweite Schicht einer jeweiligen Wicklungszone gegenüber der dritten und vierten Schicht entlang der zweiten Orientierung versetzt sind.

Ferner wird es beim erfindungsgemäßen Stator bevorzugt, wenn die fünfte und sechste Schicht einer jeweiligen Wicklungszone gegenüber der dritten und vierten Schicht der jeweiligen Wicklungszone um eine Nut in Umfangsrichtung versetzt sind. Bei einem solchen doppelt gesehnten Stator kommen in je zwei Nuten zwei Phasen mit einem Leiterverhältnis 2/4 zum Liegen. So können Rastmomente und Drehmomentrippel noch weiter reduziert werden. Besonders bevorzugt sind die fünfte und sechste Schicht in entgegengesetzter Orientierung zum Versatz der ersten und zweiten Schicht versetzt. Die Wicklungszonen haben dann bildlich gesprochen eine Stufenform.

Es wird bei dem erfindungsgemäßen Stator ferner bevorzugt, wenn der erste Pfad aus mehreren in Reihe geschalteten Gruppen von sechs bezüglich der Reihenschaltung aufeinanderfolgenden, in einer der ersten Wicklungszonen und einer dazu entlang der ersten Orientierung benachbarten zweiten Wicklungszone angeordneten Formleitern gebildet ist. Vorzugsweise umfasst der erste Pfad P q Gruppen bzw. jede Anordnung P Gruppen.

In vorteilhafter Ausgestaltung können dabei ein erster Formleiter einer jeweiligen der Gruppen in der fünften Schicht der ersten Wicklungszone, ein zweiter Formleiter einer jeweiligen der Gruppen in der sechsten Schicht der zweiten Wicklungszone, ein dritter Formleiter einer jeweiligen der Gruppen in der vierten Schicht der ersten Wicklungszone, ein vierter Formleiter einer jeweiligen der Gruppen in der dritten Schicht der zweiten Wicklungszone, ein fünfter Formleiter einer jeweiligen der Gruppen in der ersten Schicht der ersten Wicklungszone, und ein sechster Formleiter einer jeweiligen der Gruppen in der zweiten Schicht der zweiten Wicklungszone, angeordnet sein, wobei der erste Formleiter bis sechste Formleiter in ihrer Reihenfolge bezüglich der Reihenschaltung benannt sind. So bildet jede Gruppe zwei Schleifen der Schleifenwicklung aus. Bei dieser Ausgestaltung sind die ungeradzahligen Formleiter und der ihm nachfolgende geradzahlige Formleiter stets im äußeren, mittleren oder inneren Paar von Schichten angeordnet. Dadurch wird erreicht, dass der diese Formleiter verbindende Verbinder den Versatz zwischen den Schichten um eine Nut nicht überspringen muss. So wird ein einheitlicher Versatz um q.N Nuten realisiert. Der Versatz, der durch einen Verbinder, der einen geradzahligen Formleiter mit einem ungeradzahligen Formleiter derselben Gruppe verbindet, realisiert wird, kann indes um eins von q.N abweichen, insbesondere q N-1 sein.

Es wird ferner bevorzugt, wenn der erste Formleiter solcher Gruppen, die bezüglich der Reihenschaltung unmittelbar einem sechsten Formleiter einer anderen der Gruppen nachfolgen, in derjenigen ersten Wicklungszone angeordnet ist, die dem sechsten Formleiter der anderen der Gruppen entlang der ersten Orientierung nachfolgt. Der Verbinder, welche den sechsten und ersten Formleiter verbindet, realisiert damit den Wellenanteil der kombinierten Wellen- und Schleifenwicklung. Verbinder, welche den sechsten und ersten Formleiter von Gruppen derselben Anordnung verbinden, realisieren vorzugsweise einen Versatz um q·N-1 oder, insbesondere beim doppelt gesehnten Stator, um q·N-2 Nuten. Verbinder, welche den sechsten und ersten Formleiter von Gruppen unterschiedlicher Anordnungen verbinden, realisieren vorzugsweise einen Versatz um q-N-2 oder, insbesondere beim doppelt gesehnten Stator, um q·N-3 Nuten. Im Vergleich zu ungesehnten bzw. geraden Statoren kann durch diese Verringerung der Versätze Leitermaterial für die Verbinder eingespart werden.

Es wird bei dem erfindungsgemäßen Stator ferner bevorzugt, wenn der zweite Pfad aus mehreren in Reihe geschalteten Gruppen von sechs bezüglich der Reihenschaltung aufeinanderfolgenden, in vier aufeinanderfolgenden Wicklungszonen angeordneten Formleitern gebildet ist. Typischerweise umfasst der zweite Pfad P q Gruppen bzw. jede Anordnung P Gruppen.

In vorteilhafter Ausgestaltung können dabei ein erster Formleiter einer jeweiligen der Gruppen in der sechsten Schicht einer der ersten Wicklungszonen, ein zweiter Formleiter einer jeweiligen der Gruppen in der fünften Schicht einer entlang der zweiten Orientierung folgenden zweiten Wicklungszone, ein dritter Formleiter einer jeweiligen der Gruppen in der zweiten Schicht einer entlang der zweiten Orientierung folgenden ersten Wicklungszone, ein vierter Formleiter einer jeweiligen der Gruppen in der ersten Schicht einer entlang der zweiten Orientierung folgenden zweiten Wicklungszone, ein fünfter Formleiter einer jeweiligen der Gruppen in der dritten Schicht in derselben ersten Wicklungszone wie der dritte Formleiter und ein sechster Formleiter einer jeweiligen der Gruppen in der vierten Schicht in derselben zweiten Wicklungszone wie der vierte Formleiter angeordnet sein, wobei der erste Formleiter bis sechste Formleiter in ihrer Reihenfolge bezüglich der Reihenschaltung benannt sind. Dabei bildet der den zweiten und dritten Formleiter verbindende Verbinder den Wellenanteil der kombinierten Schleifen- und Wellenwicklung aus. Bei dieser Ausgestaltung sind die ungeradzahligen Formleiter und der ihm nachfolgende geradzahlige Formleiter stets im äußeren, mittleren oder inneren Paar von Schichten angeordnet. Dadurch wird erreicht, dass der diese Formleiter verbindende Verbinder den Versatz zwischen den Schichten um eine Nut nicht überspringen muss somit einen einheitlichen Versatz um q.N Nuten realisiert. Der Versatz der durch einen Verbinder, der einen geradzahligen Formleiter mit einem ungeradzahligen Formleiter verbindendet, realisiert wird, kann indes kleiner als q.N sein, insbesondere q-N-1 oder q N-2 sein.

Es wird ferner bevorzugt, wenn der erste Formleiter solcher Gruppen, die bezüglich der Reihenschaltung unmittelbar einem sechsten Formleiter einer anderen der Gruppen nachfolgen, in derselben ersten Wicklungszone wie der fünfte Formleiter der anderen der Gruppen angeordnet ist. So bildet jedes Paar von zwei benachbarten Gruppen des zweiten Pfads zwei Schleifen der Schleifenwicklung aus. Verbinder, welche den sechsten und ersten Formleiter von Gruppen derselben Anordnung verbinden, realisieren vorzugsweise einen Versatz um q.N oder, insbesondere beim doppelt gesehnten Stator, um q·N-1 Nuten. Verbinder, welche den sechsten und ersten Formleiter von Gruppen unterschiedlicher Anordnungen verbinden, realisieren vorzugsweise einen Versatz um q N-1 oder, insbesondere beim doppelt gesehnten Stator, um q·N-2 Nuten. Im Vergleich zu ungesehnten bzw. geraden Statoren kann durch diese Verringerung der Versätze Leitermaterial für die Verbinder eingespart werden.

Die Gruppen des ersten Pfads können auch als Gruppen erster Art und die Gruppen des zweiten Pfads als Gruppen zweiter Art bezeichnet werden.

Bei dem erfindungsgemäßen Stator kann vorteilhafterweise außerdem vorgesehen sein, dass die Verbinder abwechselnd als Verbinder erster Art, die an einer ersten Stirnseite des Statorkerns angeordnet sind, und als Verbinder zweiter Art, die an einer der ersten Stirnseite gegenüberliegenden zweiten Stirnseite des Statorkerns angeordnet sind, ausgebildet sind. Bevorzugt sind dabei die ersten und zweiten äußeren Formleiter eines jeweiligen Pfads durch Verbinder zweiter Art mit dem ihm bezüglich der Reihenschaltung benachbarten Formleiter verbunden. Insbesondere können so die äußeren Formleiter an der Stirnseite, an der sich die Verbinder erster Art befinden, kontaktiert bzw. angeschlossen werden.

In bevorzugter Ausgestaltung ist dabei vorgesehen, dass die Verbinder erster Art einstückig mit den durch sie verbundenen Formleitern ausgebildet sind und sich an der ersten Stirnseite aus dem Statorkern heraus erstrecken. Der Verbinder erster Art und die durch ihn verbundenen Formleiter sind vorzugsweise aus einem elektrischen leitfähigen Stab geformt, wobei der Verbinder erster Art insbesondere durch Biegen des Stabs ausgebildet ist.

Ein jeweiliger erster Verbinder, die durch ihn verbundenen Formleiter und die sich an die Formleiter anschließenden Verbindungselemente zweier zweiter Verbinder können folglich ein einstückiges Leitersegment ausbilden, welches auch als Haarnadelleiter (engl. hair pin conductor) oder U-Pin bezeichnet werden kann.

Alternativ oder zusätzlich kann vorgesehen sein, dass die Verbinder zweiter Art zwei Verbindungselemente umfassen, die sich an der zweiten Stirnseite an die durch den Verbinder zweiter Art verbundenen Formleiter aus dem Statorkern heraus erstreckend anschließen und, insbesondere stoffschlüssig, miteinander elektrisch leitend verbunden sind. Auch die Formleiter und die an sie anschließenden Verbindungselemente können aus dem bzw. einem elektrisch leitfähigen Stab geformt sein, wobei die Verbindungselemente insbesondere durch Biegen des Stabs nach dem Einsetzen in den Statorkern ausgebildet sind.

Bevorzugt verbinden die Verbinder zweiter Art Paare von bezüglich der Reihenschaltung unmittelbar aufeinanderfolgenden Formleitern in der ersten Schicht und der zweiten Schicht und/oder in der dritten Schicht und der vierten Schicht und/oder in der fünften Schicht und der sechsten Schicht verbinden. Dies ermöglich, wie bereits für die detaillierte Ausgestaltung durch die ersten und zweiten Gruppen beschrieben, allgemein die Möglichkeit, dass die Verbinder zweiter Art nicht den schichtweisen Versatz innerhalb der Wicklungszonen überspringen müssen und so einheitlich ausgestaltet werden können. Dies ist besonders günstig, wenn die Verbinder zweiter Art durch die miteinander verbundenen Verbindungselemente ausgebildet sind.

Es wird beim erfindungsgemäßen Stator außerdem bevorzugt, wenn dieser ferner eine Anschlusseinrichtung mit Phasenanschlüssen und wenigstens einem Sternpunkt umfasst. Mittels einer solchen Anschlusseinrichtungen kann der Stator mit elektrischer Leistung zum Ausbilden eines magnetischen Drehfelds versorgt werden.

Gemäß einer bevorzugten ersten Ausgestaltung schaltet die Anschlusseinrichtung die Pfade einer jeweiligen Phase derart parallel, dass die ersten äußeren Formleiter mit den Phasenanschlüssen und die zweiten äußeren Formleiter zu einem Sternpunkt oder zu zwei Sternpunkten verbunden sind oder dass die zweiten äu-ßeren Formleiter mit den Phasenanschlüssen und die ersten äußeren Formleiter zu einem Sternpunkt oder zu zwei Sternpunkten verbunden sind. Gemäß einer bevorzugten zweiten Ausgestaltung schaltet die Anschlusseinrichtung die Pfade einer jeweiligen Phase derart in Reihe, dass einer der äußeren Formleiter eines der Pfade mit den Phasenanschlüssen verbunden ist und einer der äußeren Formleiter des anderen der Pfade mit dem Sternpunkt verbunden ist.

An den ersten äußeren Formleiter und/oder den zweiten äußeren Formleiter schließt sich bevorzugt an der ersten Stirnseite ein Anschlusselement an und an der zweiten Stirnseite ein Verbindungselement eines Verbinders zweiter Art an. Eine solche Anordnung kann auch als I-Pin bezeichnet werden. Das Anschlusselement erstreckt sich vorzugsweise weiter in Axialrichtung als die Verbinder erster Art. Die Anschlusselemente werden bevorzugt durch die Anschlusseinrichtung kontaktiert.

Die der Erfindung zugrunde liegende Aufgabe wird ferner gelöst durch eine elektrische Maschine zum Antreiben eines Fahrzeugs, umfassend einen Stator nach einem der vorhergehenden Ansprüche und einen innerhalb des Stators drehbar gelagerten Rotor. Die elektrische Maschine ist bevorzugt ein Elektromotor. Die elektrische Maschine kann z.B. eine permanenterregte Synchronmaschine bzw. ein permanenterregter Synchronmotor oder eine Asynchronmaschine/Induktionsmaschine bzw. ein Asynchronmotor sein.

Weitere Vorteile und Einzelheiten der vorliegenden Erfindung ergeben sich aus den im Folgenden beschriebenen Ausführungsbeispielen und anhand der Zeichnungen. Diese sind schematische Darstellungen und zeigen:
- Fig. 1: eine Prinzipskizze eines Stators;
- Fig. 2: ein Blockschaltbild der Statorwicklung eines ersten Ausführungsbeispiels des erfindungsgemäßen Stators;
- Fig. 3: ein Wicklungsschema gemäß dem ersten Ausführungsbeispiel;
- Fig. 4: das Teilwicklungsschema der Gruppen erster Art gemäß dem ersten Ausführungsbeispiel;
- Fig. 5: das Teilwicklungsschema der Gruppen zweiter Art gemäß dem ersten Ausführungsbeispiel;
- Fig. 6: eine Prinzipskizze mehrerer Leitersegmente gemäß dem ersten Ausführungsbeispiel;
- Fig. 7: ein Wicklungsschema gemäß einem zweiten Ausführungsbeispiel des erfindungsgemäßen Stators;
- Fig. 8: ein Wicklungsschema gemäß einem dritten Ausführungsbeispiel des erfindungsgemäßen Stators;
- Fig. 9: ein Wicklungsschema gemäß einem vierten Ausführungsbeispiel des erfindungsgemäßen Stators;
- Fig. 10: ein Blockschaltbild der Statorwicklung gemäß weiteren Ausführungsbeispielen des erfindungsgemäßen Stators;
- Fig. 11: ein Blockschaltbild der Statorwicklung gemäß weiteren Ausführungsbeispielen des erfindungsgemäßen Stators;
- Fig. 12: eine Prinzipskizze eines Fahrzeugs mit einem Ausführungsbeispiel der erfindungsgemäßen elektrischen Maschine.

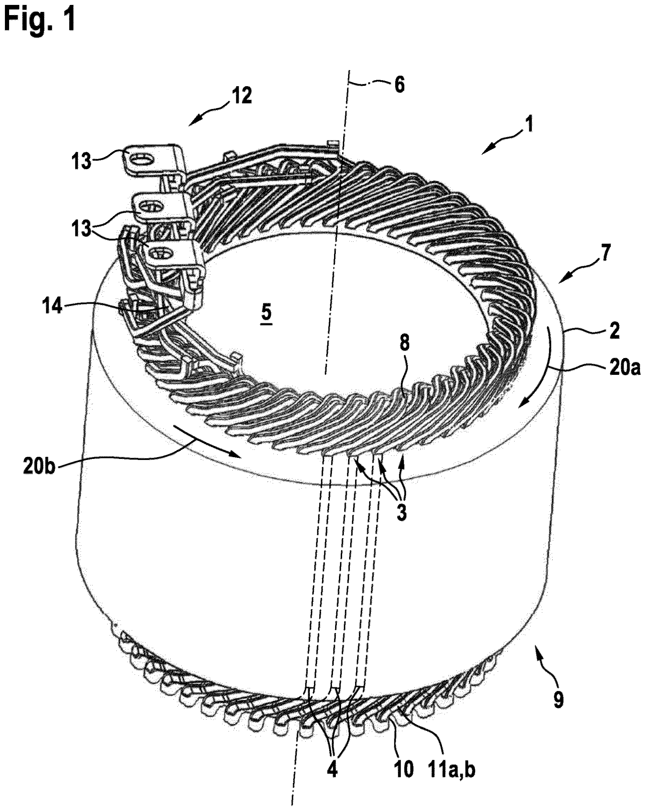

Fig. 1 ist eine Prinzipskizze eines Stators 1.

Der Stator 1 weist einen Statorkern 2 auf, der eine Vielzahl von in Umfangsrichtung ausgebildeten Nuten 3 aufweist. Daneben weist der Stator 1 eine Vielzahl von Formleitern 4 auf, die geschichtet in den Nuten 3 angeordnet sind. Die Formleiter 4 erstrecken sich vollständig in axialer Richtung, also parallel zu einer einen Aufnahmeraum 5 für einen Rotor durchsetzenden Mittelachse 6, durch die Nuten 3.

An einer ersten Stirnseite 7 des Stators 1 sind die Formleiter 4 paarweise durch Verbinder erster Art 8 verbunden. Die Verbinder erster Art 8 sind dabei einstückig mit dem Paar Formleiter 4 ausgebildet und realisieren eine Biegung um 180°. An einer zweiten Stirnseite 9 des Stators 1 sind die Formleiter 4 paarweise durch Verbinder zweiter Art 10 verbunden. Die Verbinder zweiter Art 10 umfassen zwei sich einstückig an die verbundenen Formleiter 4 anschließende, gebogene Verbindungselemente 11a, 11b, die miteinander verbunden sind. Die Verbindung ist hier stoffschlüssig, insbesondere durch Schweißen, ausgebildet. Die Formleiter 4 und die Verbinder 8, 10 bilden eine Statorwicklung des Stators 1 aus.

In Fig. 1 ist ferner eine Anschlusseinrichtung 12 gezeigt, welche Phasenanschlüsse 13 und einen Sternpunkt 14 oder mehrere Sternpunkte der Statorwicklung ausbildet.

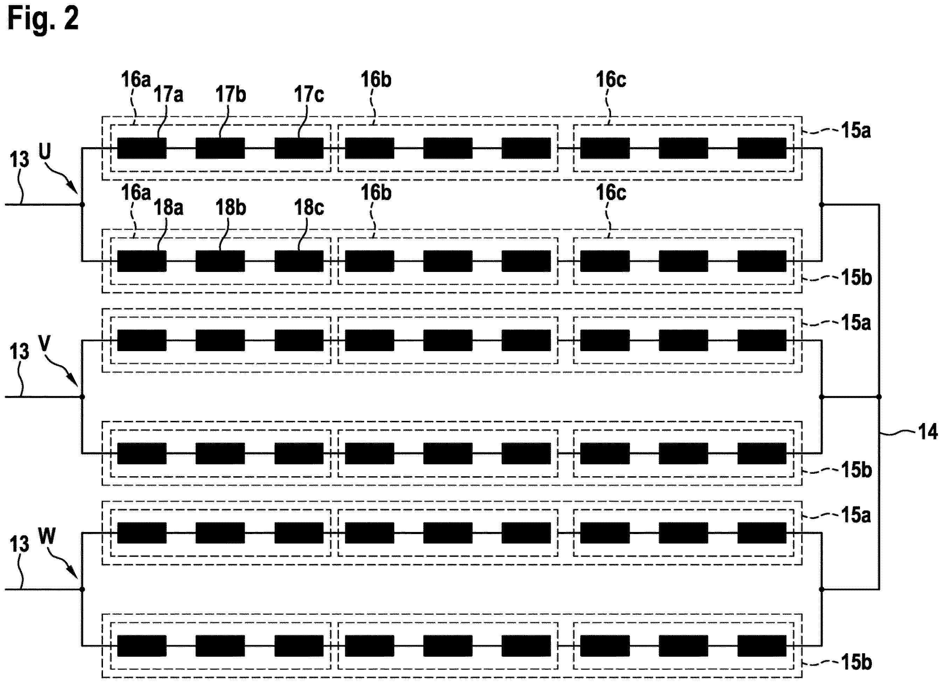

Fig. 2 ist ein Blockschaltbild einer Statorwicklung gemäß einem ersten Ausführungsbeispiel eines Stators 1, auf den sich die Ausführungen zum in Fig. 1 gezeigten Stator 1 übertragen lassen.

Der Stator 1 gemäß dem ersten Ausführungsbeispiel weist in der gezeigten exemplarischen Konfiguration N = 3 Phasen U, V, W, P = 3 Polpaare und eine Lochzahl q = 3 auf. Für jede Phase U, V, W bilden die Formleiter 4 einen ersten Pfad 15a und einen zweiten Pfad 15b aus. Die Pfade 15a, 15b einer jeweiligen Phase U, V, W sind mittels der Anschlusseinrichtung 12 parallelgeschaltet. Die Formleiter 4 eines jeweiligen Pfads 15a, 15b sind in Reihe geschaltet. Mittels der Anschlusseinrichtung 12 sind die parallelgeschalteten Pfade 15a, 15b einer jeweiligen Phase U, V, W einerseits mit den Phasenanschlüssen 13 verbunden und andererseits zum Sternpunkt 14 zusammengeschaltet.

Jeder Pfad 15a, 15b weist q = 3 Anordnungen 16a-c von in Reihe geschalteten Formleitern 4 auf. Die Anordnungen 16a-c des ersten Pfads 15a sind jeweils aus P = 3 Gruppen erster Art 17a-c der in Reihe geschalteten Formleiter 4 gebildet. Die Anordnungen 16a-c des zweiten Pfads 15b sind jeweils aus P = 3 Gruppen zweiter Art 18a-c der in Reihe geschalteten Formleiter 4 gebildet.

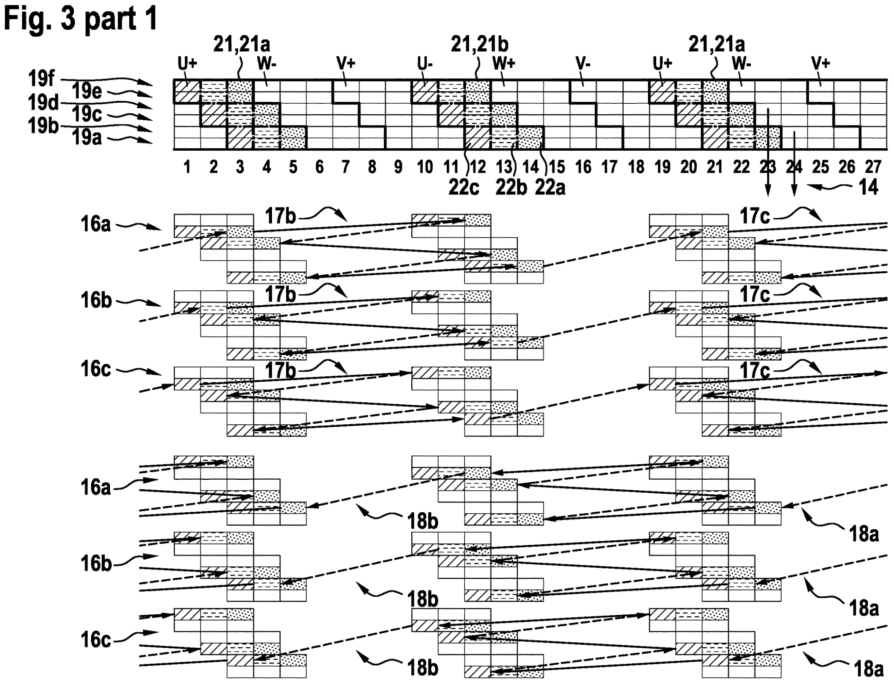

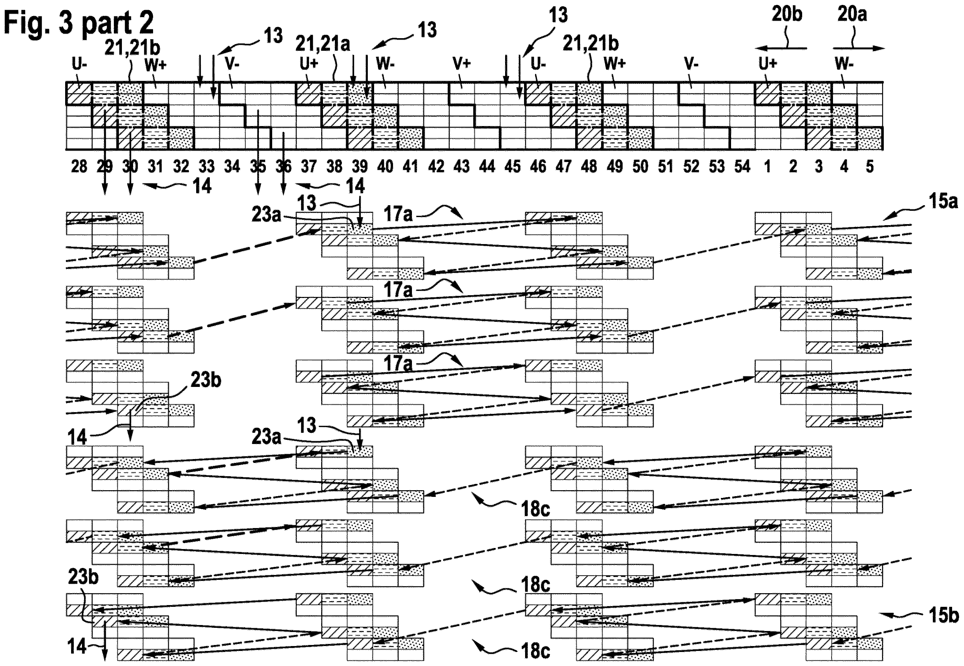

Fig. 3 ist ein Wicklungsschema der Statorwicklung gemäß dem ersten Ausführungsbeispiel.

Der Statorkern weist eine Gesamtzahl von 2·P·N·q = 54 Nuten 3. Die Lochzahl q beschreibt also das Verhältnis der Anzahl der Nuten 3 zum Produkt aus der Anzahl der Pole 2 P und der Anzahl der Phasen N.

Die Formleiter 4 sind dabei in einer ersten Schicht 19a, einer zweiten Schicht 19b, einer dritten Schicht 19c, einer vierten Schicht 19d einer fünften Schicht 19e und einer sechsten Schicht 19f angeordnet, wobei die Schichten 19a-f entsprechend ihrer Reihenfolge von radial innen nach radial außen benannt sind. Die erste Schicht 19a ist mithin die radial innerste Schicht und die sechste Schicht 19f die radial äußerste Schicht der sechs Schichten 19a-f. In jeder Schicht 19a-f einer jeweiligen Nut 3 ist genau ein Formleiter 4 angeordnet. Anders gesagt bildet jede Schicht 19a-f einer jeweiligen Nut 3 einen Aufnahmeplatz für genau einen Formleiter 4 aus. Daraus ergibt sich eine Anzahl von insgesamt 2·P·N·q·L = 324 Aufnahmeplätzen bzw. Formleitern 4 des Stators 1, wobei L die Anzahl der Schichten 19a-f beschreibt.

Fig. 3 zeigt durch zwei oberhalb der oberen Tabelle angeordnete Pfeile eine erste Orientierung 20a der Umfangsrichtung, die von der ersten Stirnseite 7 des Stators 1 aus gesehen dem Uhrzeigersinn entspricht, und eine zweite Orientierung 20b, die von der ersten Stirnseite 7 des Stators 1 aus betrachtet dem Gegenuhrzeigersinn entspricht (siehe auch Fig. 1). Ferner zeigt Fig. 3 unterhalb der oberen Tabelle eine Nutnummerierung von 1 bis 54. Die obere Tabelle in Fig. 3 zeigt, zu welcher Phase U, V, W ein in einem jeweiligen Aufnahmeplatz angeordneter Formleiter 4 gehört, wobei durch den Zusatz "+" bzw. "-" eine Stromrichtung eines elektrischen Stroms durch den entsprechenden Formleiter 4 bezeichnet ist. Ersichtlich sind die Formleiter je Phase U, V, W in 2 P = 6 Wicklungszonen 21 angeordnet, die jeweils genau q L = 18 Aufnahmeplätze umfassen.

Im vorliegenden Ausführungsbeispiel erstreckt sich jede Wicklungszone 21 radial über die sechs Schichten 19a-f. Die Wicklungszonen 21 zeichnen sich dadurch aus, dass die erste Schicht 19a und die zweite Schicht 19b gegenüber der dritten Schicht 19c und der vierten Schicht 19d um eine Nut 3 entlang der ersten Orientierung 20a in Umfangsrichtung versetzt sind und dass die fünfte Schicht 19e und die sechste Schicht 19f gegenüber der dritten Schicht 19c und der vierten Schicht 19d um eine Nut 3 entlang der zweiten Orientierung 20b in Umfangsrichtung versetzt sind. Mithin erstreckt sich jede Wicklungszone 21 in der Umfangsrichtung über genau q+2=5 unmittelbar benachbarte Nuten 3. Die Wicklungszonen 21 sind ferner in erste Wicklungszonen 21a und zweite Wicklungszonen 21b unterteilt, die sich in Umfangsrichtung abwechseln und entgegengesetzt durchströmt werden, was durch die Beschriftung U+, U-, V+, V-, W+, W- für eine jeweilige Phase U, V, W bezeichnet ist.

Die Wicklungszonen 21 sind wiederum in eine erste Teilwicklungszone 22a, in eine zweite Teilwicklungszone 22b und in eine dritte Teilwicklungszone 22c untergliedert, die in Fig. 3 durch unterschiedliche Schraffuren gekennzeichnet sind und sich jeweils über alle sechs Schichten 18a-d erstrecken. Dabei umfasst die erste Teilwicklungszone 22a die aus der ersten Orientierung 20b gesehen ersten Aufnahmeplätze der Wicklungszone 21, die zweite Teilwicklungszone 22b die unmittelbar an die Aufnahmeplätze der ersten Teilwicklungszone 22a angrenzenden, mittleren Aufnahmeplätze und die dritte Teilwicklungszone 22c die unmittelbar an die Aufnahmeplätze der zweiten Teilwicklungszone 22b angrenzenden, äußeren Aufnahmeplätze.

Unterhalb der Nutnummerierung sind in Fig. 3 die durch Formleiter 4 der Phase U belegten Aufnahmeplätze in den Wicklungszonen 21 getrennt für jede Anordnung 16a-c des ersten Pfads 15a und des zweiten Pfads 15b gezeigt. Dabei sind Formleiter 4 durch Schraffur des von ihnen belegten Aufnahmeplatzes gekennzeichnet. Verbinder erster Art 8, die zwei Formleiter 4 in zwei unterschiedlichen Aufnahmeplätzen verbinden, sind mit gestrichelten Pfeilen zwischen den beiden Aufnahmeplätzen und Verbinder 10 zweiter Art, die zwei Formleiter 4 in zwei unterschiedlichen Aufnahmeplätzen verbinden, mit durchgezogenen Pfeilen zwischen den beiden Aufnahmeplätzen gekennzeichnet. Die Darstellung der Formleiter 4 und der Verbinder 8, 10 für die Phase U ist dabei repräsentativ für die übrigen Phasen V, W, bei denen die Anordnung der Formleiter 4 und der Verbinder 8, 10 bis auf eine Verschiebung um q = 3 Nuten 3 in Umfangsrichtung jener der Phase U entspricht.

Im Folgenden wird das Wicklungsschema des Stators gemäß dem ersten Ausführungsbeispiel anhand der Phase U näher erläutert, wobei die Ausführungen entsprechend auf die übrigen Phasen V, W übertragbar sind. Dazu sind in Fig. 3 oben jene Aufnahmeplätzen für Formleiter 4, die bei dem Blockschaltbild gemäß Fig. 2 mit den Phasenanschlüssen 13 und dem Sternpunkt 14 verbunden sind, für alle Phasen U, V, W entsprechend gekennzeichnet.

Die Statorwicklung des Stators 1 bildet eine kombinierte Schleifen- und Wellenwicklung aus. Dabei erstrecken sich der erste Pfad 15a und der zweite Pfad 15b gegensinnig um den Statorkern 2, wobei sich der erste Pfad 15a entlang der ersten Orientierung 20a und der zweite Pfad 15b entlang der zweiten Orientierung 20b erstreckt.

Der bezüglich der Reihenschaltung erste äußere Formleiter 23a des ersten Pfads 15a und der bezüglich der Reihenschaltung erste äußere Formleiter 23a des zweiten Pfads 15b sind in derselben ersten Wicklungszone 21a angeordnet. Im vorliegenden Ausführungsbeispiel sind die ersten äußeren Formleiter 23a beider Pfade 15a, 15b in unmittelbar benachbarten Schichten 19e, 19f derselben Nut 3 angeordnet. Der bezüglich der Reihenschaltung zweite äußere Formleiter 23b des ersten Pfads 15a und der bezüglich der Reihenschaltung zweite äußere Formleiter 23b des zweiten Pfads 15b in derselben zweiten Wicklungszone 21b angeordnet.

Wie Fig. 3 zu entnehmen ist, realisiert jede Anordnung 16a einen vollständigen Umlauf um den Statorkern 2. Mit anderen Worten beginnen alle Anordnungen 16a-c beider Pfade 15a, 15b in derselben ersten Wicklungszone 21a und enden in derselben zweiten Wicklungszone 21b. Dabei belegt jede Anordnung 16a-c alle Wicklungszonen 21 der Phase U genau q-mal, also dreimal. Die Formleiter 4 der ersten Anordnung 16a eines jeweiligen Pfads 15a, 15b befinden sich stets in der ersten Teilwicklungszone 22a, die Formleiter 4 der zweiten Anordnung 16b eines jeweiligen Pfads 15a, 15b befinden stets in der zweiten Teilwicklungszone 22b und die die Formleiter 4 der dritten Anordnung 16c eines jeweiligen Pfads 15a, 15b befinden sich stets in der dritten Teilwicklungszone 22c.

Im vorliegenden Ausführungsbeispiel ist außerdem vorgesehen, dass die Schleifenwicklungen des ersten Pfads 15a in einem solchen Paar benachbarter erster und zweiter Wicklungszonen 21a, 21b ausgebildet sind, in denen zwei benachbarte Schleifenwicklungen des zweiten Pfads 15b durch eine Wellenwicklung verbunden sind.

Wie aus Fig. 3 ferner ersichtlich ist, sind die Gruppen erster Art 17a-c einer jeweiligen Anordnung 16a des ersten Pfads 15a und die Gruppen zweiter Art 18a-c in Bezug auf die Schicht 19a-f des die Formleiter 4 aufnehmenden Aufnahmeplatzes identisch ausgebildet. Das heißt, der Aufnahmeplatz der Formleiter unterscheidet sich lediglich hinsichtlich der Teilwicklungszone 22a-c.

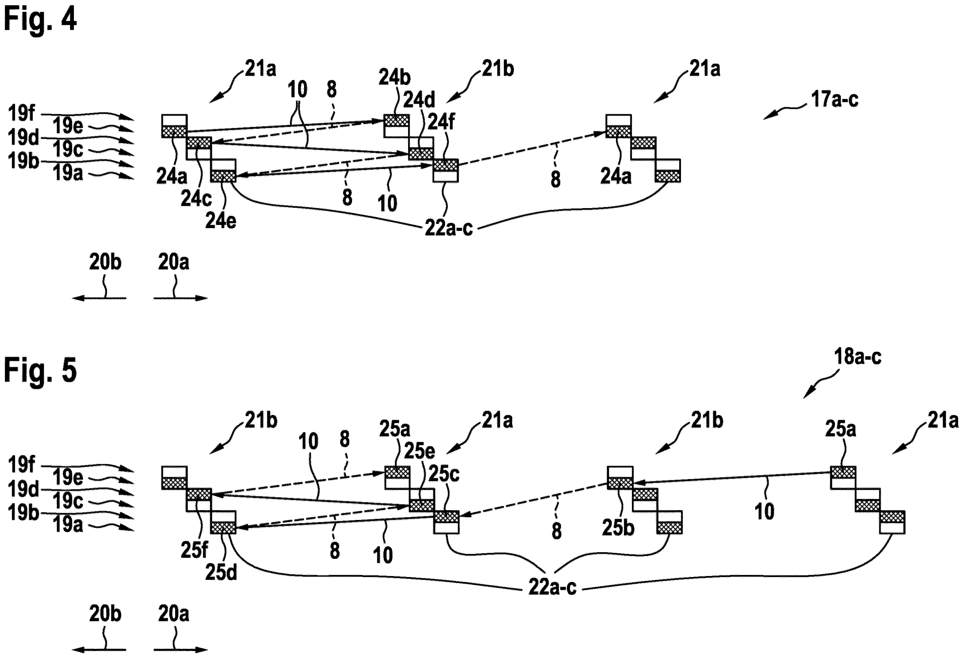

Fig. 4 ist ein Teilwicklungsschema der Gruppen erster Art 17a-c.

Die Gruppen erster Art 17a umfassen jeweils sechs Formleiter 4, nämlich einen ersten Formleiter 24a, einen zweiten Formleiter 24b, einen dritten Formleiter 24c, einen vierten Formleiter 24d, einen fünften Formleiter 24e und einen sechsten Formleiter 24f. Diese sind entsprechend ihrer Reihenfolge in der Reihenschaltung vom ersten äußeren Formleiter 23a zum zweiten äußeren Formleiter 24b (siehe Fig. 3) benannt.

Der erste Formleiter 24a einer jeweiligen der Gruppen erster Art 17a-c ist in der fünften Schicht 19e einer der ersten Wicklungszonen 21a angeordnet. Der zweite Formleiter 24b einer jeweiligen der Gruppen erster Art 17a-c ist in der sechsten Schicht 19f einer zur ersten der Wicklungszonen 21a entlang der ersten Orientierung 20a benachbarten zweiten Wicklungszone 21a angeordnet. Der dritte Formleiter 24c einer jeweiligen der Gruppen erster Art 17a-c ist in der vierten Schicht 19d der ersten Wicklungszone 21a angeordnet. Der vierte Formleiter 24d einer jeweiligen der Gruppen erster Art 17a-c ist in der dritten Schicht 19c der zweiten Wicklungszone 21b angeordnet. Der fünfte Formleiter 24e einer jeweiligen der Gruppen erster Art 17a-c ist in der ersten Schicht 19a der ersten Wicklungszone 21a angeordnet. Der sechste Formleiter 24f einer jeweiligen der Gruppen erster Art 17a-c ist in der zweiten Schicht 19b der zweiten Wicklungszone 21b angeordnet. Der erste bis sechste Formleiter 24a-f sind mithin in einem Zickzack-Muster angeordnet und bilden zwei Schleifen der kombinierten Schleifen- und Wellenwicklung aus.

Aus Fig. 4 ist ferner ersichtlich, dass der erste Formleiter 24a und der zweite Formleiter 24b, der dritte Formleiter 24c und der vierte Formleiter 24d sowie der fünfte Formleiter 24e und der sechste Formleiter 24f jeweils durch einen Verbinder zweiter Art 10, der einen Versatz um q. N=9 Nuten 3 realisiert, miteinander verbunden sind. Der zweite Formleiter 24b und der dritte Formleiter 24c sowie der vierte Formleiter 24d sind jeweils durch einen Verbinder erster Art 8, der einen Versatz um q·N-1=8 Nuten 3 realisiert, miteinander verbunden. Soweit sich an den sechsten Formleiter 24f wiederum ein erster Formleiter 24a einer bezüglich der Reihenschaltung nachfolgenden Gruppe erster Art 17a-c anschließt, was für alle Gruppen erster Art 17a-c bis auf die letzte Gruppe erster Art 17c der dritten Anordnung 16c gilt, sind der sechste Formleiter 24f und der erste Formleiter 24a durch einen Verbinder erster Art 8 verbunden. Dieser Verbinder erster Art 8 realisiert einen Versatz um q·N-2=7 Nuten 3, wenn der sechste Formleiter 24f und der erste Formleiter 24a derselben Anordnung 16a-c angehören, oder einen Versatz um q·N-3=6 Nuten 3, wenn der sechste Formleiter 24f und der erste Formleiter 24a unterschiedlichen Anordnungen 16a-c angehören.

Fig. 5 ist ein Teilwicklungsschema der Gruppen zweiter Art 18a-c.

Die Gruppen zweiter Art 18a umfassen jeweils sechs Formleiter 4, nämlich einen ersten Formleiter 25a, einen zweiten Formleiter 25b, einen dritten Formleiter 25c, einen vierten Formleiter 25d, einen fünften Formleiter 25e und einen sechsten Formleiter 25f. Diese sind entsprechend ihrer Reihenfolge in der Reihenschaltung vom ersten äußeren Formleiter 23a zum zweiten äußeren Formleiter 24b (siehe Fig. 3) benannt.

Der erste Formleiter 25a einer jeweiligen der Gruppen zweiter Art 18a-c ist in der sechsten Schicht 19f einer der ersten Wicklungszonen 21a angeordnet. Der zweite Formleiter 25b einer jeweiligen der Gruppen zweiter Art 18a-c ist in der fünften Schicht 19e einer entlang der zweiten Orientierung 20b folgenden zweiten Wicklungszone 21b angeordnet. Der dritte Formleiter 25c einer jeweiligen der Gruppen zweiter Art 18a-c ist in der zweiten Schicht 19b einer entlang der zweiten Orientierung 20b folgenden ersten Wicklungszone 21a angeordnet. Der vierte Formleiter 25d einer jeweiligen der Gruppen zweiter Art 18a-c ist in der ersten Schicht 19a einer entlang der zweiten Orientierung 20b folgenden zweiten Wicklungszone 21b angeordnet. Der fünfte Formleiter 25e einer jeweiligen der Gruppen zweiter Art 18a-c ist in der dritten Schicht 19c in derselben ersten Wicklungszone 21a wie der dritte Formleiter 25c angeordnet. Der sechste Formleiter 25f einer jeweiligen der Gruppen zweiter Art 18a-c ist in der vierten Schicht 19d in derselben zweiten Wicklungszone 21b wie der vierte Formleiter 25d angeordnet. Die Verbinder erster Art 8, die den zweiten Formleiter 25b und den dritten Formleiter 25c verbinden, bilden dabei einen Wellenanteil der kombinierten Schleifen- und Wellenwicklung aus.

Aus Fig. 5 ist ferner ersichtlich, dass der erste Formleiter 25a und der zweite Formleiter 25b, der dritte Formleiter 25c und der vierte Formleiter 25d sowie der fünfte Formleiter 25e und der sechste Formleiter 25f jeweils durch einen Verbinder zweiter Art 10, der einen Versatz um q. N=9 Nuten 3 realisiert, miteinander verbunden sind. Der zweite Formleiter 25b und der dritte Formleiter 25c sind durch einen Verbinder erster Art 8, der einen Versatz um q·N-2=7 Nuten 3 realisiert, miteinander verbunden. Der vierte Formleiter 25d und der fünfte Formleiter 25e sind durch einen Verbinder erster Art 8, der einen Versatz um q·N-1=8 Nuten 3 realisiert, miteinander verbunden. Soweit sich an den sechsten Formleiter 25f wiederum ein erster Formleiter 25a einer bezüglich der Reihenschaltung nachfolgenden Gruppe zweiter Art 18a-c anschließt, was für alle Gruppen zweiter Art 18a-c bis auf die letzte Gruppe zweiter Art 18c der dritten Anordnung 16c gilt, sind der sechste Formleiter 25f und der erste Formleiter 25a durch einen Verbinder erster Art 8 verbunden. Dieser Verbinder realisiert einen Versatz um q·N-1=8 Nuten 3, wenn der sechste Formleiter 24f und der erste Formleiter 24a derselben Anordnung 16a-c angehören, oder einen Versatz um q·N-2=7 Nuten 3, wenn der sechste Formleiter 24f und der erste Formleiter 24a unterschiedlichen Anordnungen 16a-c angehören.

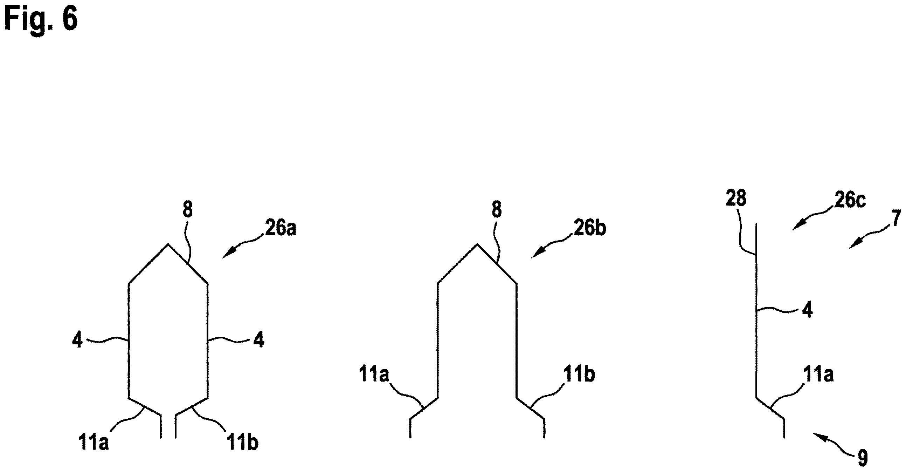

Fig. 6 ist eine Prinzipskizze mehrerer Leitersegmente 26a-c gemäß dem ersten Ausführungsbeispiel.

Die Leitersegmente 26a, 26b sind jeweils aus zwei Formleitern 4, einem Verbinder erster Art 8, der sich an die zwei Formleiter 4 an der ersten Stirnseite 7 anschließt und diese verbindet, und zwei Verbindungselementen 11a, 11b, die sich an der zweiten Stirnseite 9 an einen jeweiligen der zwei Formleiter 4 anschließen, ausgebildet. Die Leitersegmente 26a, 26b ist hier exemplarisch einstückig ausgebildet, können aber alternativ auch durch Zusammenfügen getrennter Komponenten ausgebildet sein. Jeweils zwei Verbindungselemente 11a, 11b unterschiedlicher Leitersegmente 26a, 26b bilden einen Verbinder zweiter Art 10 aus.

Bei dem Leitersegment 26a weisen die Verbindungselemente 11a, 11b zueinander in entgegensetzte Orientierungen 20a, 20b. Die verbundenen zweiten und dritten Formleiter 24b, 24c einer jeweiligen Gruppen erster Art 17a-c, die verbundenen vierten und fünften Formleiter 24d, 24e einer jeweiligen Gruppe erster Art 17a-c, die verbundenen vierten und fünften Formleiter 25d, 25e einer jeweiligen Gruppe zweiter Art 18a-c sowie miteinander verbundene sechste und erste Formleiter 25f, 25a unterschiedlicher Gruppen zweiter Art 18a-c sind durch Leitersegmente 26a ausgebildet.

Bei dem Leitersegment 26b weisen die Verbindungelemente 11a, 11b von einander weg in entgegengesetzte Orientierungen 20a, 20b. Die verbundenen zweiten und dritten Formleiter 25b, 25c einer jeweiligen Gruppe zweiter Art 18a-c sowie miteinander verbundene sechste und erste Formleiter 24f, 24a unterschiedlicher Gruppen erster Art 17a-c sind durch Leitersegmente 26b ausgebildet.

Das Leitersegment 26c umfasst einen Formleiter 4, ein sich an den Formleiter 4 an der zweiten Stirnseite 9 anschließendes Verbindungselement 11a und ein Anschlusselement 28 zum Kontaktieren mit der Anschlusseinrichtung 12 (siehe Fig. 1). Die ersten äußeren Formleiter 23a, also der erste Formleiter 24a der ersten Gruppe 17a der ersten Anordnung 16a des ersten Pfads 15a und der erste Formleiter 25a der ersten Anordnung 16a des zweiten Pfads 15b, sowie die zweiten äu-ßeren Formleiter 23b, also der sechste Formleiter 24f der letzten Gruppe 17c der dritten Anordnung 16c des ersten Pfads 15a und der sechste Formleiter 25f der letzten Gruppe 18c der dritten Anordnung 16c des zweiten Pfads 15b, sind durch Leitersegmente 26c ausgebildet.

In Fig. 6 sind die Leitersegmente 26a-c schematisch, insbesondere ohne genaue Darstellung der Anzahl der Nuten 3, um welche die Verbinder erster Art 10, 10a, 10b bzw. die Verbindungselemente 11a, 11b einen Versatz realisieren, gezeigt. Die Leitersegmente 26a, 26b können auch als U-Pins bzw. Haarnadelleiter und die Leitersegmente 26c als I-Pins aufgefasst werden. Die gesamte Statorwicklung wird dann auch als Haarnadelwicklung (engl. hair pin winding) bezeichnet.

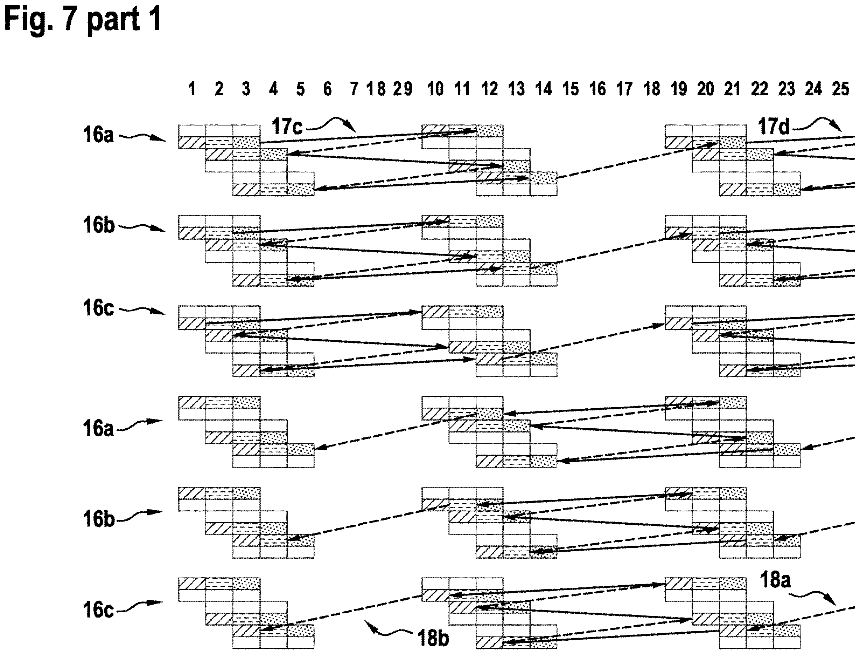

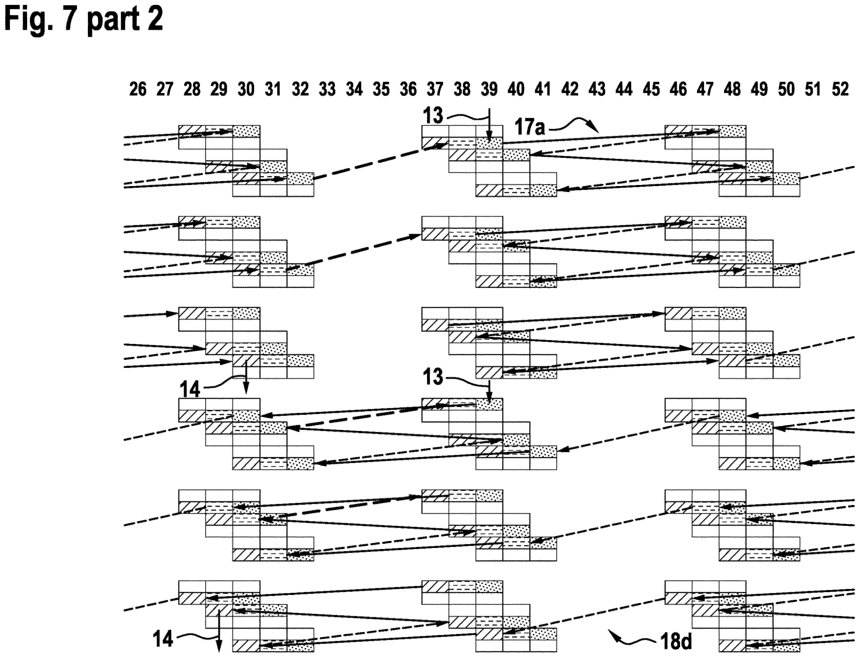

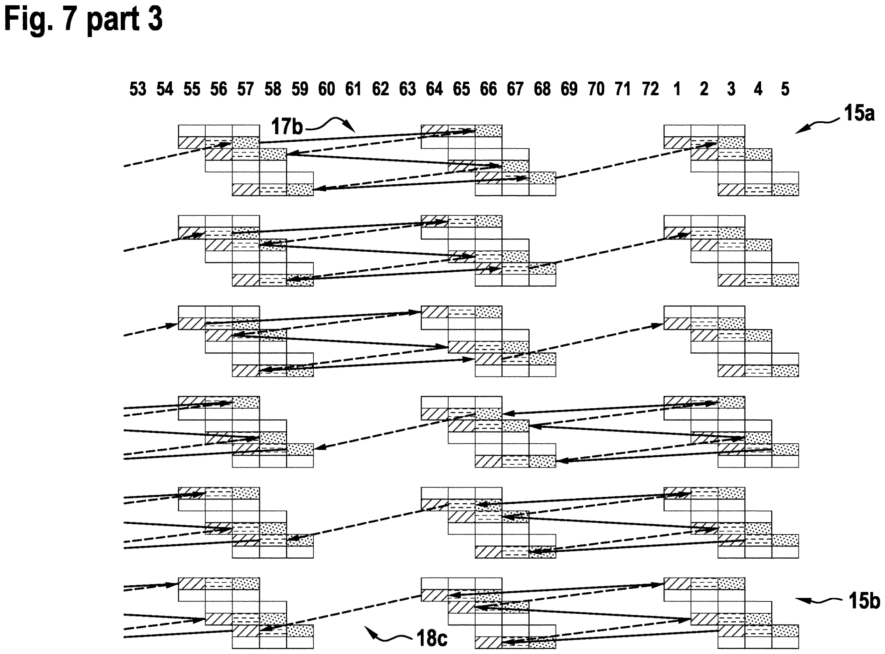

Fig. 7 ist ein Wicklungsschema gemäß einem zweiten Ausführungsbeispiel des Stators 1. Dabei sind gleiche oder gleichwirkende Komponenten mit identischen Bezugszeichen versehen. Im Folgenden werden lediglich die wesentlichen Unterschiede gegenüber dem ersten Ausführungsbeispiel dargestellt.

Der Stator 1 gemäß dem zweiten Ausführungsbeispiel weist P = 4 Polpaare auf. Daraus ergibt sich insbesondere eine Anzahl von 72 Nuten 3. Durch die erhöhte Polpaarzahl sind bei jeder Anordnung 16a-c des ersten Pfads 15a vier Gruppen erster Art 17a-d und bei jeder Anordnung 16a-c des zweiten Pfads 15b vier Gruppen zweiter Art 18a-d vorgesehen.

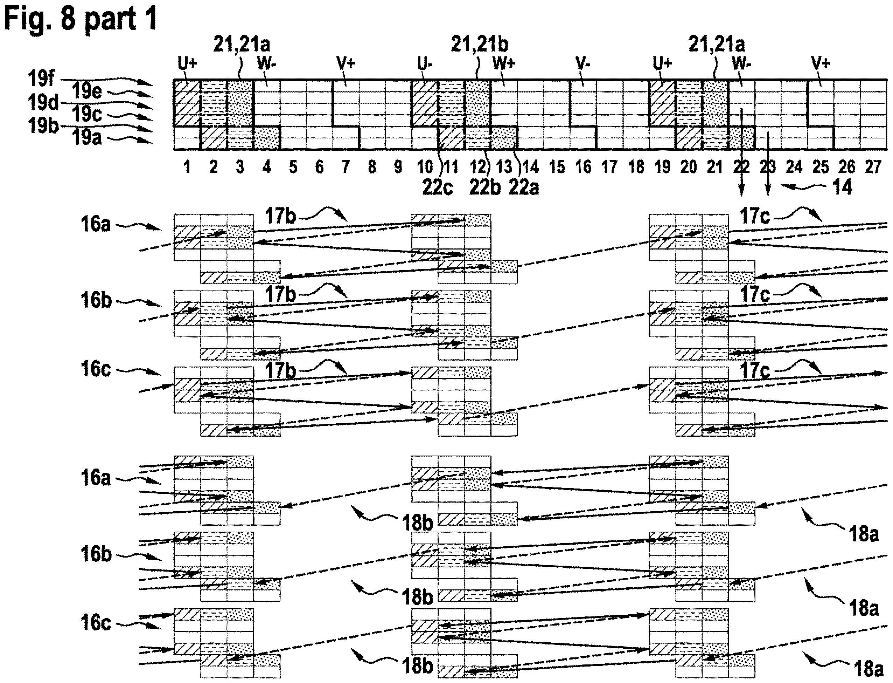

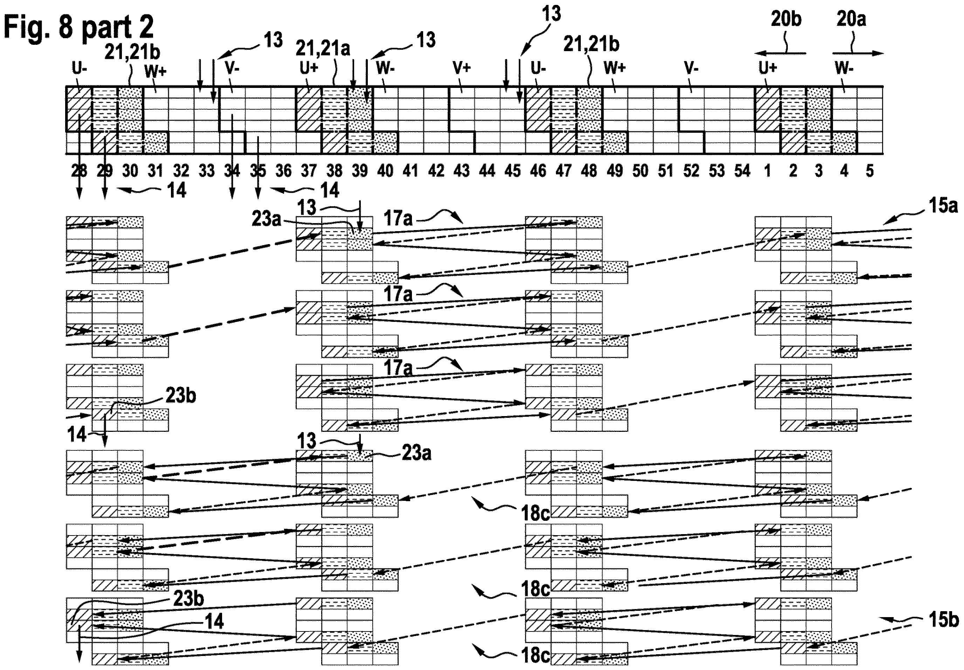

Fig. 8 ist ein Wicklungsschema gemäß einem dritten Ausführungsbeispiel des Stators 1. Dabei sind gleiche oder gleichwirkende Komponenten mit identischen Bezugszeichen versehen. Im Folgenden werden lediglich die wesentlichen Unterschiede gegenüber dem ersten Ausführungsbeispiel dargestellt.

Beim dritten Ausführungsbeispiel des Stators 1 sind nur die erste Schicht 19a und die zweite Schicht 19b einer jeweiligen Wicklungszone 21 um eine Nut 3 gegenüber der dritten Schicht 19c und der vierten Schicht 19d versetzt. Die fünfte Schicht 19e und die sechste Schicht 19f einer jeweiligen Wicklungszone 21 befinden sich sind in denselben Nuten 3 wie die dritte Schicht 19c und die vierte Schicht 19d.

Daraus folgt insbesondere, dass die Verbinder zweiter Art 10, die den ersten Formleiter 24a und den zweiten Formleiter 24b, den dritten Formleiter 24c und den vierten Formleiter 24d sowie der fünften Formleiter 24e und den sechsten Formleiter 24f einer jeweiligen Gruppe erster Art 17a-c verbinden, wie im ersten Ausführungsbeispiel einen Versatz um q N=9 Nuten 3 realisieren. Die Verbinder erster Art 8, die den zweiten 24b Formleiter und den dritte Formleiter 24c einer jeweiligen Gruppe erster Art 17a-c verbinden, realisieren einen Versatz um q N=9 Nuten 3. Die Verbinder erster Art, die den vierten Formleiter 24d und den fünften Formleiter 24e einer jeweiligen Gruppe erste Art 17a-c verbinden, realisieren einen Versatz um q·N-1=8 Nuten 3. Die Verbinder erster Art 8, die einen sechsten Formleiter 24f mit einem ersten Formleiter 24a derselben Anordnung 16a-c verbinden realisieren einen Versatz um q·N-1=8 Nuten 3. Die Verbinder erster Art 8, die einen sechsten Formleiter 24f mit einem ersten Formleiter 24a unterschiedlicher Anordnungen 16a-c verbinden, realisieren einen Versatz um q·N-2=7 Nuten 3.

Ferner realisieren die Verbinder zweiter Art 10, die den ersten Formleiter 25a und den zweiten Formleiter 25b, den dritten Formleiter 25c und den vierten Formleiter 25d sowie der fünften Formleiter 25e und den sechsten Formleiter 25f einer jeweiligen Gruppe zweiter Art 18a-c verbinden, wie im ersten Ausführungsbeispiel einen Versatz um q N=9 Nuten 3. Die Verbinder erster Art 8, die den zweiten Formleiter 25b und den dritte Formleiter 25c einer jeweiligen Gruppe zweiter Art 18a-c verbinden, und die Verbinder erster Art 8, die den zweiten Formleiter 25b und den dritte Formleiter 25c einer jeweiligen Gruppe zweiter Art 18a-c verbinden, realisieren einen Versatz um q·N-1=8 Nuten 3. Die Verbinder erster Art 8, die einen sechsten Formleiter 25f mit einem ersten Formleiter 25a derselben Anordnung 16a-c verbinden realisieren einen Versatz um q N=9 Nuten 3. Die Verbinder erster Art 8, die einen sechsten Formleiter 25f mit einem ersten Formleiter 25a unterschiedlicher Anordnungen 16a-c verbinden, realisieren einen Versatz um q·N-1=8 Nuten 3.

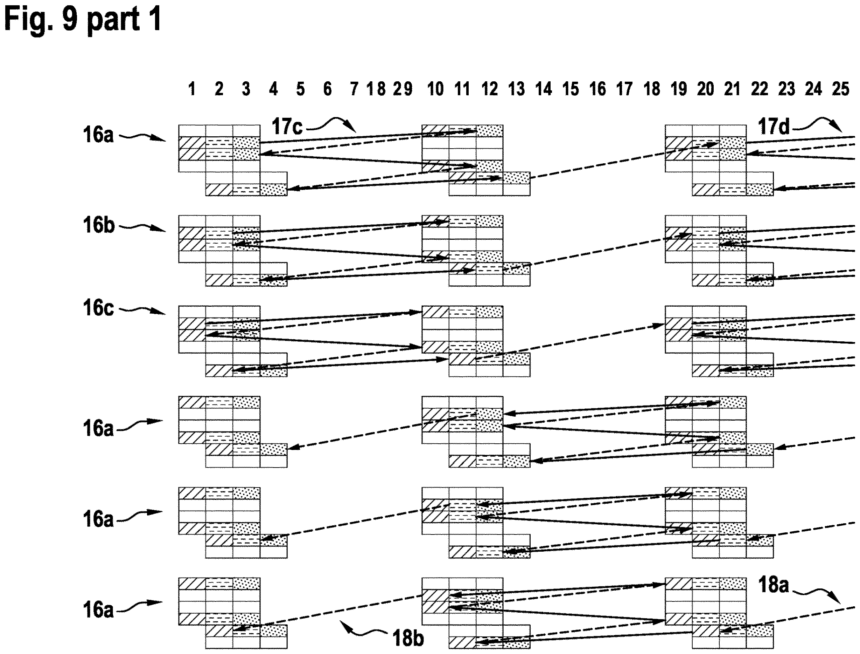

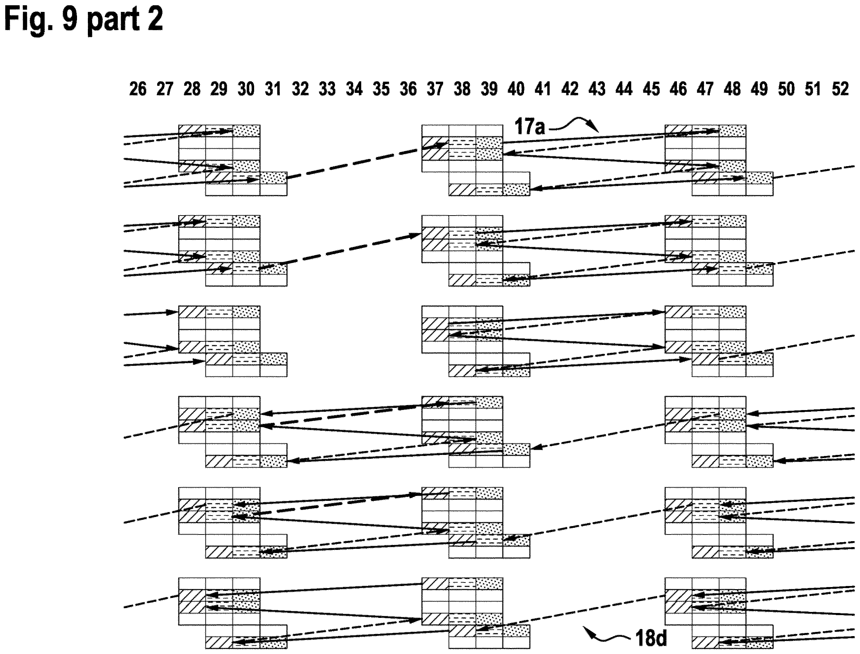

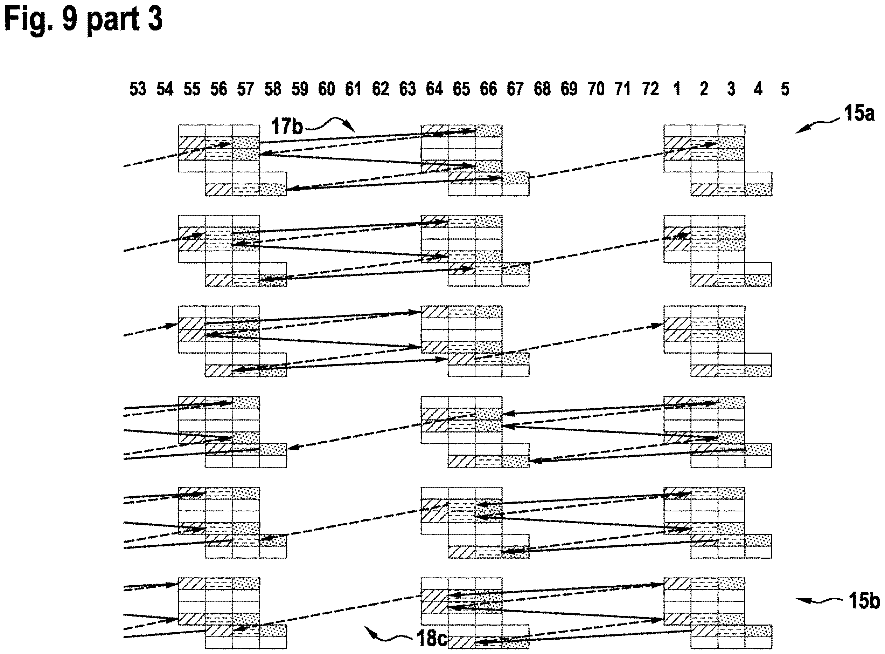

Fig. 9 ist ein Wicklungsschema gemäß einem vierten Ausführungsbeispiel des Stators 1. Dabei sind gleiche oder gleichwirkende Komponenten mit identischen Bezugszeichen versehen. Im Folgenden werden lediglich die wesentlichen Unterschiede gegenüber dem dritten Ausführungsbeispiel dargestellt.

Der Stator 1 gemäß dem vierten Ausführungsbeispiel weist P = 4 Polpaare auf. Daraus ergibt sich insbesondere eine Anzahl von 72 Nuten 3. Durch die erhöhte Polpaarzahl sind bei jeder Anordnung 16a-c des ersten Pfads 15a vier Gruppen erster Art 17a-d und bei jeder Anordnung 16a-c des zweiten Pfads 15b vier Gruppen zweiter Art 18a-d vorgesehen.

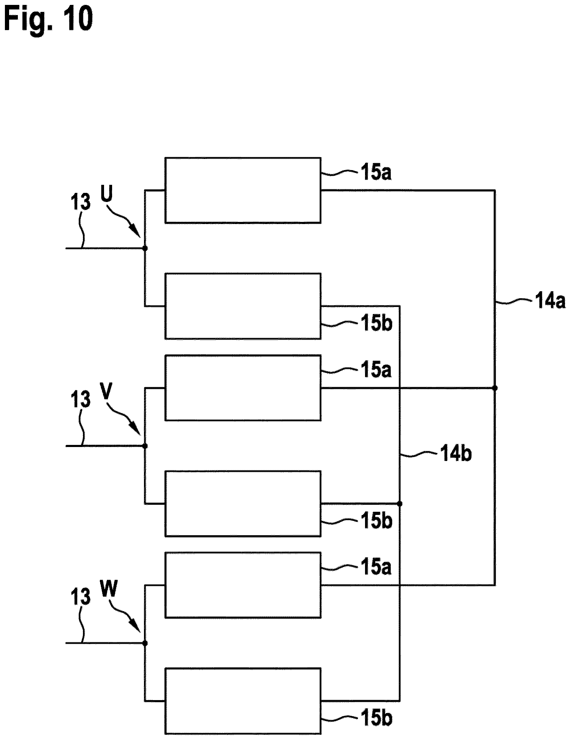

Fig. 10 ist ein Blockschaltbild der Statorwicklung gemäß weiteren Ausführungsbeispielen des Stators 1. Hier sind die äußeren Formleiter 23b der ersten Pfade 15a zu einem ersten Sternpunkt 14a und die äußeren Formleiter 23b der zweiten Pfade 15b zu einem zweiten Sternpunkt 14b verschaltet.

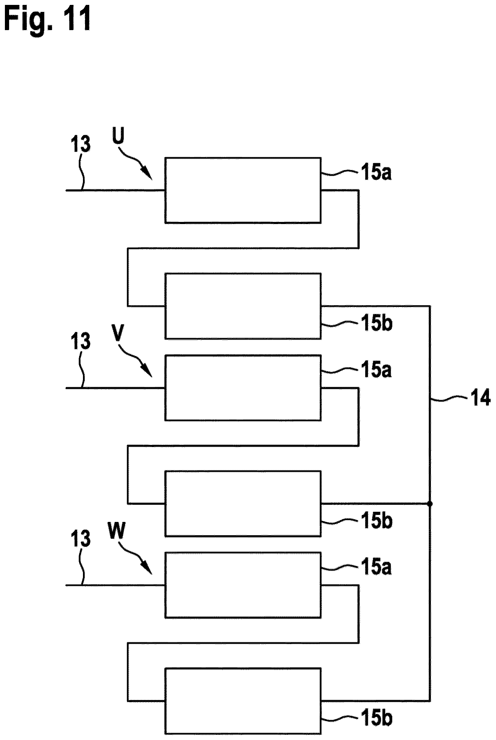

Fig. 11 ist ein Blockschaltbild der Statorwicklung gemäß weiteren Ausführungsbeispielen des Stators 1. Hier sind bei einer jeweiligen Phase U, V, W der zweite äußere Formleiter 23b des ersten Pfads 15a mit dem ersten äußeren Formleiter 23a des zweiten Pfads 15b in Reihe geschaltet und die zweiten äußeren Formleiter 23b eines jeweiligen zweiten Pfads 15b zu einem Sternpunkt 14 verschaltet.

Im Übrigen entsprechen die Ausführungsbeispiele gemäß Fig. 10 und 11 einem der zuvor beschriebenen Ausführungsbeispiele.

Gemäß weiteren Ausführungsbeispielen, die im Übrigen dem ersten oder dritten Ausführungsbeispiel entsprechen, weist der Stator 1 lediglich P=2 Polpaare auf, sodass lediglich zwei Gruppen erster Art 17a, 17b bzw. zwei Gruppen zweiter Art 18a, 18b in einer jeweiligen Anordnung 16a-c und lediglich 36 Nuten 3 vorgesehen sind.

Gemäß weiteren Ausführungsbeispielen, die im Übrigen einem der zuvor beschriebenen Ausführungsbeispiele entsprechen, ist die erste Schicht 19a die radial äußerste Schicht und die sechste Schicht 19f die radial innerster Schicht.

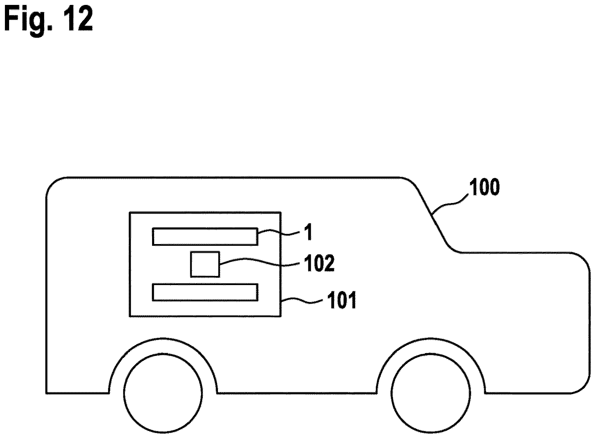

Fig. 12 ist eine Prinzipskizze eines Fahrzeugs 100 mit einem Ausführungsbeispiel einer elektrischen Maschine 101, beispielsweise einer Synchronmaschine oder eine Asynchronmaschine/Induktionsmaschine, die als Elektromotor ausgebildet ist. Die elektrische Maschine 101 umfasst einen Stator 1 gemäß einem der zuvor beschriebenen Ausführungsbeispiele und einen Rotor 102, der drehbar innerhalb des Stators 1 gelagert ist. Im vorliegenden Ausführungsbeispiel ist der Rotor 102 exemplarisch permanenterregt.

## Patentansprüche

1. Stator (1) für eine elektrische Maschine (101), wobei
- der Stator (1) eine Anzahl N Phasen (U, V, W), eine Anzahl P Polpaare und eine Lochzahl q aufweist, wobei N ≥ 3 und P ≥ 2 und q = 3, wobei
- der Stator (1) einen Statorkern (2) mit einer Vielzahl von Nuten (3) und eine Vielzahl von Formleitern (4), die in einer ersten bis L-ten Schicht (19a-f) radial geschichtet in den Nuten (3) angeordnet sind, umfasst, wobei L = 6 ist und die Schichten (19a-f) in ihrer Reihenfolge in Radialrichtung benannt sind, wobei
- die Formleiter (4) je Phase einen ersten Pfad (15a) und einen zweiten Pfad (15b), die in Reihe oder parallel miteinander verschaltbar oder verschaltet sind, ausbilden und in P ersten Wicklungszonen (21a) und P zweiten Wicklungszonen (21b) angeordnet sind, wobei sich die ersten und zweiten Wicklungszonen (21a, 21b) in Umfangsrichtung abwechseln und sich jede Wicklungszone (21) über die L Schichten erstreckt, wobei eine erste Orientierung (20a) und eine der ersten Orientierung (20a) entgegengesetzte zweite Orientierung (20b) der Umfangsrichtung definiert sind, wobei
- die Formleiter (4) eines jeweiligen Pfads (15a, 15b) durch Verbinder (8, 10), welche Formleiter (4) in benachbarten Wicklungszonen (21) derselben Phase (U, V, W) abwechselnd an einer ersten Stirnseite (7) und einer der ersten Stirnseite (7) gegenüberliegenden zweiten Stirnseite (9) des Statorkerns (2) verbinden, zu einer Reihenschaltung mit einem bezüglich der Reihenschaltung ersten äußeren Formleiter (23a) und einem bezüglich der Reihenschaltung zweiten äußeren Formleiter (23b) verschaltet sind, wobei
- die erste und zweite Schicht (19a, 19b) einer jeweiligen Wicklungszone (21) gegenüber der dritten und vierten Schicht (19c, 19d) der jeweiligen Wicklungszone (21) um eine Nut (3) in Umfangsrichtung versetzt sind, wobei
- die Pfade (15a, 15b) jeweils eine kombinierte Schleifen- und Wellenwicklung ausbilden.

2. Stator nach Anspruch 1, wobei
der erste äußere Formleiter (23a) des ersten Pfads (15a) in einer der ersten Wicklungszonen (21a) angeordnet ist und der erste äußere Formleiter (23a) des zweiten Pfads (15b) in einer der ersten Wicklungszonen (21a), insbesondere in derselben ersten Wicklungszone (21a), in der der erste äußere Formleiter (23a) des ersten Pfads (15a) angeordnet ist, angeordnet ist.

3. Stator nach einem der vorhergehenden Ansprüche, wobei
jede Wicklungszone (21) in eine erste bis q-te Teilwicklungszone (22a-c) untergliedert, sich jede Teilwicklungszone (22a-c) über die L Schichten (19a-f) erstreckt und die Teilwicklungszonen (22a-c) einer jeweiligen Wicklungszone (21) in ihrer Reihenfolge in Umfangsrichtung benannt sind.

4. Stator nach Anspruch 3, wobei
jeder Pfad (15a, 15b) in q in Reihe geschaltete Anordnungen (16a-c) von in Reihe geschalteten Formleitern (4) untergliedert ist und jede Anordnung (16a-c) alle Wicklungszonen (21) der Phase (U, V, W) q-mal belegt, wobei die Formleiter (4) einer jeweiligen Anordnung (16a-c) in derselben Teilwicklungszone (22a-c) angeordnet sind.

5. Stator nach Anspruch 3 oder 4, wobei
der erste äußere Formleiter (23a) eines jeweiligen Pfads (15a, 15b) in der ersten Teilwicklungszone (22a) angeordnet ist und/oder der zweite äußere Formleiter (23b) eines jeweiligen Pfads (15a, 15b) in der dritten Teilwicklungszone (22c) angeordnet ist.

6. Stator nach einem der vorhergehenden Ansprüche, wobei
sich der erste Pfad (15a) entlang der ersten Orientierung (20a) und der zweite Pfad (15b) entlang der zweiten Orientierung (20b) von ihrem ersten äußeren Formleiter (23a) zu ihrem zweiten äußeren Formleiter (23b) erstrecken.

7. Stator nach einem der vorhergehenden Ansprüche, wobei
die erste und zweite Schicht (19a, 19b) einer jeweiligen Wicklungszone gegenüber der dritten und vierten Schicht (19c, 19d) entlang der ersten Orientierung (20a) versetzt ist.

8. Stator nach einem der vorhergehenden Ansprüche, wobei
die fünfte und sechste Schicht (19e, 19f) einer jeweiligen Wicklungszone (21) gegenüber der dritten und vierten Schicht (19c, 19d) der jeweiligen Wicklungszone (21) um eine Nut (3) in Umfangsrichtung, insbesondere in entgegengesetzter Orientierung (20b) zum Versatz der ersten und zweiten Schicht (19a, 19b), versetzt sind.

9. Stator nach einem der vorhergehenden Ansprüche, wobei
der erste Pfad (15a) aus mehreren in Reihe geschalteten Gruppen (17a-d) von sechs bezüglich der Reihenschaltung aufeinanderfolgenden, in einer der ersten Wicklungszonen (21a) und einer dazu entlang der ersten Orientierung (20a) benachbarten zweiten Wicklungszone (21b) angeordneten Formleitern (4) gebildet ist, wobei
- ein erster Formleiter (24a) einer jeweiligen der Gruppen (17a-d) in der fünften Schicht (19e) der ersten Wicklungszonen (21a),
- ein zweiter Formleiter (24b) einer jeweiligen der Gruppen (17a-d) in der sechsten Schicht (19f) der zweiten Wicklungszone (21b),
- ein dritter Formleiter (24c) einer jeweiligen der Gruppen (17a-d) in der vierten Schicht (19d) der ersten Wicklungszone (21a),
- ein vierter Formleiter (24d) einer jeweiligen der Gruppen (17a-d) in der dritten Schicht (19c) der zweiten Wicklungszone (21b),
- ein fünfter Formleiter (24e) einer jeweiligen der Gruppen (17a-d) in der ersten Schicht (19a) der ersten Wicklungszone (21a), und
- ein sechster Formleiter (24f) einer jeweiligen der Gruppen (17a-d) in der zweiten Schicht (19b) der zweiten Wicklungszone (21b)
angeordnet sind, wobei der erste Formleiter (19a) bis sechste Formleiter (19f) in ihrer Reihenfolge bezüglich der Reihenschaltung benannt sind, wobei
der erste Formleiter (24a) solcher Gruppen (17a-d), die bezüglich der Reihenschaltung unmittelbar einem sechsten Formleiter (24f) einer anderen der Gruppen (17a-d) nachfolgen, in derjenigen ersten Wicklungszone (21a) angeordnet ist, die dem sechsten Formleiter (24f) der anderen der Gruppen (17a-d) entlang der ersten Orientierung (20a) nachfolgt.

10. Stator nach einem der vorhergehenden Ansprüche, wobei
der zweite Pfad (15b) aus mehreren in Reihe geschalteten Gruppen (18a-d) von sechs bezüglich der Reihenschaltung aufeinanderfolgenden, in vier aufeinanderfolgenden Wicklungszonen (21) angeordneten Formleitern (4) gebildet ist, wobei
- ein erster Formleiter (25a) einer jeweiligen der Gruppen (18a-d) in der sechsten Schicht (19f) einer der ersten Wicklungszonen (21a),
- ein zweiter Formleiter (25b) einer jeweiligen der Gruppen (18a-d) in der fünften Schicht (19e) einer entlang der zweiten Orientierung (20b) folgenden zweiten Wicklungszone (21b),
- ein dritter Formleiter (25c) einer jeweiligen der Gruppen (18a-d) in der zweiten Schicht (19b) einer entlang der zweiten Orientierung (20b) folgenden ersten Wicklungszone (21a),
- ein vierter Formleiter (25d) einer jeweiligen der Gruppen (18a-d) in der ersten Schicht (19a) einer entlang der zweiten Orientierung (20b) folgenden zweiten Wicklungszone (21b),
- ein fünfter Formleiter (25e) einer jeweiligen der Gruppen (18a-d) in der dritten Schicht (19c) in derselben ersten Wicklungszone (21a) wie der dritte Formleiter (25c) und
- ein sechster Formleiter (25f) einer jeweiligen der Gruppen (18a-d) in der vierten Schicht (19d) in derselben zweiten Wicklungszone (21b) wie der vierte Formleiter (25d)
angeordnet sind, wobei der erste Formleiter (25a) bis sechste Formleiter (25f) in ihrer Reihenfolge bezüglich der Reihenschaltung benannt sind,
wobei der erste Formleiter (25a) solcher Gruppen, die bezüglich der Reihenschaltung unmittelbar einem sechsten Formleiter (25f) einer anderen der Gruppen (18a-d) nachfolgen, in derselben ersten Wicklungszone (21a) wie der fünfte Formleiter (25e) der anderen der Gruppen (18a-d) angeordnet ist.

11. Stator nach einem der vorhergehenden Ansprüche, wobei
die Verbinder (8, 10) abwechselnd als Verbinder erster Art (8), die an einer ersten Stirnseite (7) des Statorkerns (2) angeordnet sind, und als Verbinder zweiter Art (10), die an einer der ersten Stirnseite (7) gegenüberliegenden zweiten Stirnseite (9) des Statorkerns (2) angeordnet sind, ausgebildet sind.

12. Stator nach Anspruch 11, wobei
- die Verbinder erster Art (8) einstückig mit den durch sie verbundenen Formleitern (4) ausgebildet sind und sich an der ersten Stirnseite (7) aus dem Statorkern (2) heraus erstrecken und/oder
- die Verbinder zweiter Art (10) zwei Verbindungselemente (11a, 11b) umfassen, die sich an der zweiten Stirnseite (9) an die durch den Verbinder zweiter Art (10) verbundenen Formleiter (4) aus dem Statorkern (2) heraus erstreckend anschließen und, insbesondere stoffschlüssig, miteinander elektrisch leitend verbunden sind.

13. Stator nach Anspruch 11 oder 12, wobei
die Verbinder zweiter Art (10) Paare von bezüglich der Reihenschaltung unmittelbar aufeinanderfolgenden Formleitern (4)
- in der ersten Schicht (19a) und der zweiten Schicht (19b) und/oder
- in der dritten Schicht (19c) und der vierten Schicht (19d) und/oder
- in der fünften Schicht (19e) und der sechsten (19f) Schicht verbinden.

14. Stator nach einem der vorhergehenden Ansprüche, ferner umfassend eine Anschlusseinrichtung (12) mit Phasenanschlüssen (13) und wenigstens einem Sternpunkt (14), welche
- die Pfade (15a, 15b) einer jeweiligen Phase (U, V, W) derart parallel schaltet, dass die ersten äußeren Formleiter (23a) mit den Phasenanschlüssen (13) und die zweiten äußeren Formleiter (23b) zu einem Sternpunkt (14) oder zu zwei Sternpunkten (14a, 14b) verbunden sind oder dass die zweiten äußeren Formleiter (23b) mit den Phasenanschlüssen (13) und die ersten äußeren Formleiter (23a) zu einem Sternpunkt (14) oder zwei Sternpunkten (14a, 14b) verbunden sind, oder
- die Pfade (15a, 15b) einer jeweiligen Phase (U, V, W) derart in Reihe schaltet, dass einer der äußeren Formleiter (23a, 23b) eines der Pfade (15a, 15b) mit den Phasenanschlüssen (13) verbunden ist und einer der äußeren Formleiter (23a, 23b) des anderen der Pfade (15a, 15b) mit dem Sternpunkt (14) verbunden ist.

15. Elektrische Maschine (101) zum Antreiben eines Fahrzeugs (100), umfassend einen Stator (1) nach einem der vorhergehenden Ansprüche und einen innerhalb des Stators (1) drehbar gelagerten Rotor (102).

## Claims

1. Stator (1) for an electric machine (101), wherein
- the stator (1) has a number N of phases (U, V, W), a number P of pole pairs and a slot per pole per phase q, wherein N ≥ 3 and P ≥ 2 and q = 3, wherein
- the stator (1) comprises a stator core (2) having a large number of slots (3) and a large number of shaped conductors (4), which are arranged in the slots (3) so as to be radially layered in a first to Lth layer (19a-f), wherein L = 6 and the layers (19a-f) are designated in their order in the radial direction, wherein
- the shaped conductors (4) of each phase form a first path (15a) and a second path (15b), which can be or are interconnected in series or in parallel with one another, and are arranged in P first winding zones (21a) and P second winding zones (21b), wherein the first and second winding zones (21a, 21b) alternate in the circumferential direction and each winding zone (21) extends over the L layers, wherein a first orientation (20a) and a second orientation (20b) - contrary to the first orientation (20a) - of the circumferential direction are defined,
wherein
- the shaped conductors (4) of a respective path (15a, 15b) are interconnected to form a series connection having a first outer shaped conductor (23a) in terms of the series connection and a second outer shaped conductor (23b) in terms of the series connection by connectors (8, 10), which connect shaped conductors (4) in adjacent winding zones (21) of the same phase (U, V, W) in an alternating manner at a first end side (7) and a second end side (9) - opposite the first end side (7) - of the stator core (2), wherein
- the first and second layer (19a, 19b) of a respective winding zone (21) are offset with respect to the third and fourth layer (19c, 19d) of the respective winding zone (21) by one slot (3) in the circumferential direction, wherein
- the paths (15a, 15b) each form a combined lap and wave winding.

2. Stator according to Claim 1, wherein
the first outer shaped conductor (23a) of the first path (15a) is arranged in one of the first winding zones (21a) and the first outer shaped conductor (23a) of the second path (15b) is arranged in one of the first winding zones (21a), in particular in the same first winding zone (21a) in which the first outer shaped conductor (23a) of the first path (15a) is arranged.

3. Stator according to one of the preceding claims,
wherein
each winding zone (21) is subdivided into a first to qth sub-winding zone (22a-c), each sub-winding zone (22a-c) extends over the L layers (19a-f) and the sub-winding zones (22a-c) of a respective winding zone (21) are designated in their order in the circumferential direction.

4. Stator according to Claim 3, wherein
each path (15a, 15b) is subdivided into q series-connected arrangements (16a-c) of series-connected shaped conductors (4) and each arrangement (16a-c) occupies all winding zones (21) of the phase (U, V, W) q times, wherein the shaped conductors (4) of a respective arrangement (16a-c) are arranged in the same sub-winding zone (22a-c).

5. Stator according to Claim 3 or 4, wherein
the first outer shaped conductor (23a) of a respective path (15a, 15b) is arranged in the first sub-winding zone (22a) and/or the second outer shaped conductor (23b) of a respective path (15a, 15b) is arranged in the third sub-winding zone (22c).

6. Stator according to one of the preceding claims,
wherein
the first path (15a) extends from its first outer shaped conductor (23a) to its second outer shaped conductor (23b) along the first orientation (20a) and the second path (15b) extends from its first outer shaped conductor (23a) to its second outer shaped conductor (23b) along the second orientation (20b).

7. Stator according to one of the preceding claims,
wherein
the first and second layer (19a, 19b) of a respective winding zone is offset with respect to the third and fourth layer (19c, 19d) along the first orientation (20a) .

8. Stator according to one of the preceding claims,
wherein
the fifth and sixth layer (19e, 19f) of a respective winding zone (21) are offset with respect to the third and fourth layer (19c, 19d) of the respective winding zone (21) by one slot (3) in the circumferential direction, in particular in the contrary orientation (20b) to the offset of the first and second layer (19a, 19b) .

9. Stator according to one of the preceding claims,
wherein
the first path (15a) is formed from a plurality of series-connected groups (17a-d) of six successive shaped conductors (4), in terms of the series connection, which are arranged in one of the first winding zones (21a) and a second winding zone (21b) adjacent thereto along the first orientation (20a), wherein
- a first shaped conductor (24a) of a respective one of the groups (17a-d) is arranged in the fifth layer (19e) of the first winding zones (21a),
- a second shaped conductor (24b) of a respective one of the groups (17a-d) is arranged in the sixth layer (19f) of the second winding zone (21b),
- a third shaped conductor (24c) of a respective one of the groups (17a-d) is arranged in the fourth layer (19d) of the first winding zone (21a),
- a fourth shaped conductor (24d) of a respective one of the groups (17a-d) is arranged in the third layer (19c) of the second winding zone (21b),
- a fifth shaped conductor (24e) of a respective one of the groups (17a-d) is arranged in the first layer (19a) of the first winding zone (21a), and
- a sixth shaped conductor (24f) of a respective one of the groups (17a-d) is arranged in the second layer (19b) of the second winding zone (21b),
wherein the first shaped conductor (19a) to sixth shaped conductor (19f) are designated in their order in terms of the series connection, wherein
the first shaped conductor (24a) of such groups (17a-d), which directly follow a sixth shaped conductor (24f) of another of the groups (17a-d) in terms of the series connection, is arranged in that first winding zone (21a) which follows the sixth shaped conductor (24f) of the other of the groups (17a-d) along the first orientation (20a) .

10. Stator according to one of the preceding claims,
wherein
the second path (15b) is formed from a plurality of series-connected groups (18a-d) of six successive shaped conductors (4), in terms of the series connection, which are arranged in four successive winding zones (21), wherein
- a first shaped conductor (25a) of a respective one of the groups (18a-d) is arranged in the sixth layer (19f) of one of the first winding zones (21a),
- a second shaped conductor (25b) of a respective one of the groups (18a-d) is arranged in the fifth layer (19e) of a following second winding zone (21b) along the second orientation (20b),
- a third shaped conductor (25c) of a respective one of the groups (18a-d) is arranged in the second layer (19b) of a following first winding zone (21a) along the second orientation (20b),
- a fourth shaped conductor (25d) of a respective one of the groups (18a-d) is arranged in the first layer (19a) of a following second winding zone (21b) along the second orientation (20b),
- a fifth shaped conductor (25e) of a respective one of the groups (18a-d) is arranged in the third layer (19c) in the same first winding zone (21a) as the third shaped conductor (25c) and
- a sixth shaped conductor (25f) of a respective one of the groups (18a-d) is arranged in the fourth layer (19d) in the same second winding zone (21b) as the fourth shaped conductor (25d),
wherein the first shaped conductor (25a) to sixth shaped conductor (25f) are designated in their order in terms of the series connection,
wherein the first shaped conductor (25a) of such groups, which directly follow a sixth shaped conductor (25f) of another of the groups (18a-d) in terms of the series connection, is arranged in the same first winding zone (21a) as the fifth shaped conductor (25e) of the other of the groups (18a-d).

11. Stator according to one of the preceding claims,
wherein
the connectors (8, 10) are designed alternately as connectors of a first type (8), which are arranged on a first end side (7) of the stator core (2), and as connectors of a second type (10), which are arranged on a second end side (9) - opposite the first end side (7) - of the stator core (2).

12. Stator according to Claim 11, wherein
- the connectors of the first type (8) are formed in one piece with the shaped conductors (4) connected by them and extend out of the stator core (2) at the first end side (7) and/or
- the connectors of the second type (10) comprise two connecting elements (11a, 11b), which, at the second end side (9), extending out of the stator core (2), adjoin the shaped conductors (4) connected by the connector of the second type (10) and are electrically conductively connected to one another, in particular in an integrally bonded manner.

13. Stator according to Claim 11 or 12, wherein
the connectors of the second type (10) connect pairs of directly successive shaped conductors (4), in terms of the series connection,
- in the first layer (19a) and the second layer (19b) and/or
- in the third layer (19c) and the fourth layer (19d) and/or
- in the fifth layer (19e) and the sixth layer (19f)

14. Stator according to one of the preceding claims, further comprising a connection device (12) with phase connections (13) and at least one star point (14), which
- connects the paths (15a, 15b) of a respective phase (U, V, W) in parallel such that the first outer shaped conductors (23a) are connected to the phase connections (13) and the second outer shaped conductors (23b) are connected to form a star point (14) or to form two star points (14a, 14b) or that the second outer shaped conductors (23b) are connected to the phase connections (13) and the first outer shaped conductors (23a) are connected to form a star point (14) or two star points (14a, 14b), or
- connects the paths (15a, 15b) of a respective phase (U, V, W) in series such that one of the outer shaped conductors (23a, 23b) of one of the paths (15a, 15b) is connected to the phase connections (13) and one of the outer shaped conductors (23a, 23b) of the other of the paths (15a, 15b) is connected to the star point (14).

15. Electric machine (101) for driving a vehicle (100), comprising a stator (1) according to one of the preceding claims and a rotor (102) rotatably mounted within the stator (1).

## Revendications

1. Stator (1) pour une machine électrique (101),
- le stator (1) possédant un nombre N de phases (U, V, W), un nombre P de paires de pôles et un nombre de q d'encoche par pôle et par phase, avec N ≥ 3 et P ≥ 2 et q = 3,
- le stator (1) comprenant un noyau de stator (2) pourvu d'une pluralité d'encoches (3) et une pluralité de conducteurs façonnés (4), qui sont disposés en couches radiales dans les encoches (3) dans une première à L-ième couche (19a-f), avec L = 6 et les couches (19a-f) étant désignées dans leur ordre dans la direction radiale,
- les conducteurs façonnés (4) formant, pour chaque phase, un premier chemin (15a) et un deuxième chemin (15b) qui peuvent être connectés ou sont connectés en série ou en parallèle l'un avec l'autre, et étant disposés en P premières zones d'enroulement (21a) et P deuxièmes zones d'enroulement (21b), les premières et deuxièmes zones d'enroulement (21a, 21b) étant en alternance dans la direction circonférentielle et chaque zone d'enroulement (21) s'étendant sur les L couches, une première orientation (20a) et une deuxième orientation (20b) de la direction circonférentielle opposée à la première orientation (20a) étant définies,
- les conducteurs façonnés (4) d'un chemin respectif (15a, 15b) étant connectés en un circuit série, avec un premier conducteur façonné extérieur (23a) par rapport au circuit série et un deuxième conducteur façonné extérieur (23b) par rapport au circuit série, par des connecteurs (8, 10) qui relient les conducteurs façonnés (4) dans des zones d'enroulement (21) voisines de la même phase (U, V, W) en alternance à une première face frontale (7) et une deuxième face frontale (9) opposée à la première face frontale (7) du noyau de stator (2),
- les première et deuxième couches (19a, 19b) d'une zone d'enroulement (21) respective étant décalées d'une encoche (3) dans la direction circonférentielle par rapport aux troisième et quatrième couches (19c, 19d) de la zone d'enroulement respective (21),
- les chemins (15a, 15b) formant respectivement un enroulement combiné en boucle et ondulé.

2. Stator selon la revendication 1,
le premier conducteur façonné extérieur (23a) du premier chemin (15a) étant disposé dans l'une des premières zones d'enroulement (21a) et le premier conducteur façonné extérieur (23a) du deuxième chemin (15b) étant disposé dans l'une des premières zones d'enroulement (21a), notamment dans la même première zone d'enroulement (21a) dans laquelle est disposé le premier conducteur façonné extérieur (23a) du premier chemin (15a).

3. Stator selon l'une des revendications précédentes, chaque zone d'enroulement (21) étant subdivisée en une première à une q-ième zone d'enroulement partiel (22a-c), chaque zone d'enroulement partiel (22a-c) s'étendant sur les L couches (19a-f) et les zones d'enroulement partiel (22a-c) d'une zone d'enroulement respective (21) étant désignées dans leur ordre dans la direction circonférentielle.

4. Stator selon la revendication 3,
chaque chemin (15a, 15b) étant subdivisé en q arrangements (16a-c) branchés en série de conducteurs façonnés (4) branchés en série, et chaque arrangement (16a-c) occupant q fois toutes les zones d'enroulement (21) de la phase (U, V, W), les conducteurs façonnés (4) d'un arrangement (16a-c) respectif étant disposés dans la même zone d'enroulement partiel (22a-c).

5. Stator selon la revendication 3 ou 4,
le premier conducteur façonné extérieur (23a) d'un chemin (15a, 15b) respectif étant disposé dans la première zone d'enroulement partiel (22a) et/ou le deuxième conducteur façonné extérieur (23b) d'un chemin (15a, 15b) respectif étant disposé dans la troisième zone d'enroulement partiel (22c).

6. Stator selon l'une des revendications précédentes, le premier chemin (15a) s'étendant le long de la première orientation (20a) et le deuxième chemin (15b) le long de la deuxième orientation (20b) depuis leur premier conducteur façonné extérieur (23a) jusqu'à leur deuxième conducteur façonné extérieur (23b).

7. Stator selon l'une des revendications précédentes, les première et deuxième couches (19a, 19b) d'une zone d'enroulement respective étant décalées par rapport aux troisième et quatrième couches (19c, 19d) le long de la première orientation (20a).

8. Stator selon l'une des revendications précédentes, les cinquième et sixième couches (19e, 19f) d'une zone d'enroulement (21) respective étant décalées par rapport aux troisième et quatrième couches (19c, 19d) de la zone d'enroulement (21) respective d'une encoche (3) dans la direction circonférentielle, notamment dans une orientation opposée (20b) par rapport au décalage des première et deuxième couches (19a, 19b).

9. Stator selon l'une des revendications précédentes, le premier chemin (15a) étant formé de plusieurs groupes (17a-d) branchés en série de six conducteurs façonnés (4) successifs par rapport au circuit série, disposés dans l'une des premières zones d'enroulement (21a) et dans une deuxième zone d'enroulement (21b) voisine de celle-ci le long de la première orientation (20a),
- un premier conducteur façonné (24a) de l'un respectif des groupes (17a-d) étant disposé dans la cinquième couche (19e) des premières zones d'enroulement (21a),
- un deuxième conducteur façonné (24b) de l'un respectif des groupes (17a-d) étant disposé dans la sixième couche (19f) de la deuxième zone d'enroulement (21b),
- un troisième conducteur façonné (24c) de l'un respectif des groupes (17a-d) étant disposé dans la quatrième couche (19d) de la première zone d'enroulement (21a),
- un quatrième conducteur façonné (24d) de l'un respectif des groupes (17a-d) étant disposé dans la troisième couche (19c) de la deuxième zone d'enroulement (21b),
- un cinquième conducteur façonné (24e) de l'un respectif des groupes (17a-d) étant disposé dans la première couche (19a) de la première zone d'enroulement (21a),
- un sixième conducteur façonné (24f) de l'un respectif des groupes (17a-d) étant disposé dans la deuxième couche (19b) de la deuxième zone d'enroulement (21b),
le premier conducteur façonné (19a) au sixième conducteur façonné (19f) étant désignés dans leur ordre par rapport au circuit série,
le premier conducteur façonné (24a) des groupes (17a-d) qui suivent immédiatement un sixième conducteur façonné (24f) d'un autre des groupes (17a-d) par rapport au circuit série étant disposé dans la première zone d'enroulement (21a) qui suit le sixième conducteur façonné (24f) de l'autre des groupes (17a-d) le long de la première orientation (20a).

10. Stator selon l'une des revendications précédentes, le deuxième chemin (15b) étant formé de plusieurs groupes (18a-d) branchés en série de six conducteurs façonnés (4) successifs par rapport au circuit série, disposés dans quatre zones d'enroulement (21) successives,
- un premier conducteur façonné (25a) de l'un respectif des groupes (18a-d) étant disposé dans la sixième couche (19f) de l'une des premières zones d'enroulement (21a),
- un deuxième conducteur façonné (25b) de l'un respectif des groupes (18a-d) étant disposé dans la cinquième couche (19e) d'une deuxième zone d'enroulement (21b) qui suit la deuxième orientation (20b),
- un troisième conducteur façonné (25c) de l'un respectif des groupes (18a-d) étant disposé dans la deuxième couche (19b) d'une première zone d'enroulement (21a) qui suit la deuxième orientation (20b),
- un quatrième conducteur façonné (25d) de l'un respectif des groupes (18a-d) étant disposé dans la première couche (19a) d'une deuxième zone d'enroulement (21b) qui suit la deuxième orientation (20b),
- un cinquième conducteur façonné (25e) de l'un respectif des groupes (18a-d) étant disposé dans la troisième couche (19c) dans la même première zone d'enroulement (21a) que le troisième conducteur façonné (25c),
- un sixième conducteur façonné (25f) de l'un respectif des groupes (18a-d) étant disposé dans la quatrième couche (19d) dans la même deuxième zone d'enroulement (21b) que le quatrième conducteur façonné (25d),
le premier conducteur façonné (25a) au sixième conducteur façonné (25f) étant désignés dans leur ordre par rapport au circuit série,
le premier conducteur façonné (25a) des groupes qui suivent immédiatement un sixième conducteur façonné (25f) d'un autre des groupes (18a-d) par rapport au circuit série étant disposé dans la même première zone d'enroulement (21a) que le cinquième conducteur façonné (25e) de l'autre des groupes (18a-d).

11. Stator selon l'une des revendications précédentes, les connecteurs (8, 10) étant réalisés en alternance comme connecteurs de premier type (8), qui sont disposés sur une première face frontale (7) du noyau de stator (2), et comme connecteurs de deuxième type (10), qui sont disposés sur une deuxième face frontale (9) du noyau de stator (2), opposée à la première face frontale (7).

12. Stator selon la revendication 11,
- les connecteurs de premier type (8) étant réalisés d'un seul tenant avec les conducteurs façonnés (4) reliés par ceux-ci et s'étendant hors du noyau de stator (2) au niveau de la première face frontale (7), et/ou
- les connecteurs de deuxième type (10) comprenant deux éléments de connexion (11a, 11b), lesquels se raccordent, au niveau de la deuxième face frontale (9), aux conducteurs façonnés (4) reliés par les connecteurs de deuxième type (10) en s'étendant hors du noyau de stator (2), et étant reliés ensemble de manière électriquement conductrice, notamment par liaison de matière.

13. Stator selon la revendication 11 ou 12,
les connecteurs de deuxième type (10) reliant des paires de conducteurs façonnés (4) directement successifs par rapport au circuit série
- dans la première couche (19a) et la deuxième couche (19b) et/ou
- dans la troisième couche (19c) et la quatrième couche (19d) et/ou
- dans la cinquième couche (19e) et la sixième couche (19f) .

14. Stator selon l'une des revendications précédentes, comprenant en outre un dispositif de raccordement (12) comprenant des bornes de phase (13) et au moins un point neutre (14), lequel
- connecte les chemins (15a, 15b) d'une phase (U, V, W) respective en parallèle de telle sorte que les premiers conducteurs façonnés extérieurs (23a) sont reliés aux bornes de phase (13) et les deuxièmes conducteurs façonnés extérieurs (23b) à un point neutre (14) ou à deux points n neutres (14a, 14b) ou que les deuxièmes conducteurs façonnés extérieurs (23b) sont reliés aux bornes de phase (13) et les premiers conducteurs façonnés extérieurs (23a) à un point neutre (14) ou à deux points neutres (14a, 14b), ou
- connecte les chemins (15a, 15b) d'une phase (U, V, W) respective en série de telle sorte que l'un des conducteurs façonnés extérieurs (23a, 23b) de l'un des chemins (15a, 15b) est relié aux bornes de phase (13) et l'un des conducteurs façonnés extérieure (23a, 23b) de l'autre des chemins (15a, 15b) est relié au point neutre (14) .

15. Machine électrique (101) destinée à entraîner un véhicule (100), comprenant un stator (1) selon l'une des revendications précédentes et un rotor (102) monté rotatif à l'intérieur du stator (1).
